(19) Europäisches Patentamt / European Patent Office / Office européen des brevets

(11) **EP 4 390 858 B1**

(12) **EUROPEAN PATENT SPECIFICATION**

(45) Date of publication and mention
of the grant of the patent:
**20.05.2026 Bulletin 2026/21**

(21) Application number: **23838710.4**

(22) Date of filing: **29.06.2023**

(51) International Patent Classification (IPC):
*G06V 10/25* (2022.01)    *G06V 10/44* (2022.01)
*G06V 10/75* (2022.01)    *G06V 10/764* (2022.01)
*G06V 10/766* (2022.01)

(52) Cooperative Patent Classification (CPC):
**G06V 10/25; G06V 10/44; G06V 10/75;
G06V 10/764; G06V 10/766**

(86) International application number:
**PCT/CN2023/103842**

(87) International publication number:
**WO 2024/012217 (18.01.2024 Gazette 2024/03)**

(54) **MODEL TRAINING METHOD AND DEVICE, AND TARGET DETECTION METHOD AND DEVICE**

MODELLTRAININGSVERFAHREN UND -VORRICHTUNG SOWIE
ZIELERKENNUNGSVERFAHREN UND -VORRICHTUNG

PROCÉDÉ ET DISPOSITIF DE FORMATION DE MODÈLE, AINSI QUE PROCÉDÉ ET DISPOSITIF
DE DÉTECTION DE CIBLE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **15.07.2022 CN 202210831544**

(43) Date of publication of application:
**26.06.2024 Bulletin 2024/26**

(73) Proprietor: **Mashang Consumer Finance Co., Ltd.
Chongqing 401121 (CN)**

(72) Inventors:
 • **LV, Yongchun**
 **Chongqing 401121 (CN)**
 • **ZHU, Hui**
 **Chongqing 401121 (CN)**
 • **WANG, Yu**
 **Chongqing 401121 (CN)**
 • **ZHOU, Xunyi**
 **Chongqing 401121 (CN)**
 • **ZENG, Dingheng**
 **Chongqing 401121 (CN)**
 • **JIANG, Ning**
 **Chongqing 401121 (CN)**

(74) Representative: **Elzaburu S.L.P.
Paseo de la Castellana 259C
Torre de Cristal, planta 28
28046 Madrid (ES)**

(56) References cited:
 **CN-A- 112 016 605    CN-A- 112 016 605
 CN-A- 112 785 565    CN-A- 114 581 652
 CN-A- 114 581 652    US-A1- 2020 074 665
 US-B2- 10 769 493**

 • YUAN HUI-SHEN ET AL: "Multi-branch Bounding
 Box Regression for Object Detection", vol. 15,
 no. 4, 5 January 2022 (2022-01-05), US, pages
 1300 - 1307, XP093223401, ISSN: 1866-9956,
 Retrieved from the Internet <URL:https://link.
 springer.com/article/10.1007/
 s12559-021-09983-x/fulltext.html> DOI: 10.1007/
 s12559-021-09983-x

- CAI ZHAOWEI ET AL: "Cascade R-CNN: Delving Into High Quality Object Detection", 18 June 2018 (2018-06-18), pages 6154 - 6162, XP033473531, Retrieved from the Internet <URL:https://openaccess.thecvf.com/content_cvpr_2018/html/Cai_Cascade_R-CNN_Delving_CVPR_2018_paper.html> [retrieved on 20181214], DOI: 10.1109/CVPR.2018.00644

- ZEMING LI ET AL: "Light-Head R-CNN: In Defense of Two-Stage Object Detector", ARXIV.ORG, CORNELL UNIVERSITY LIBRARY, 201 OLIN LIBRARY CORNELL UNIVERSITY ITHACA, NY 14853, 20 November 2017 (2017-11-20), XP081290114

**Description**

FIELD

The present application relates to the field of target detection, and in particular to a model training method, a target detection method and a device.

BACKGROUND

With a rapid development of the artificial intelligence technology, there is an increased demand in using a target detection model that was pre-trained to perform a target detection in an image to predict coordinate information of a bounding box of each target included in the image, and predict a specific category of the target in an image area enclosed by the bounding box.

Among them, during a training process of the target detection model, a loss value of a model is mainly calculated based on a cross entropy loss of a regression of the bounding box and a cross entropy loss of a classification of the bounding box, and then model parameters are iteratively optimized, resulting that for a preset sample image set, an accuracy of the model parameters of the target detection model that has been trained is relatively high, but for an image to be detected, the accuracy of the model parameters of the target detection model that has been trained is reduced, resulting in a poor generalization of the target detection model, which in turn leads to a low accuracy in labelling a position of a target object and a classification of the target object during the target detection in a model application stage. The document "Multi-branch Bounding Box Regression for Object Detection" (YUAN HUI-SHEN et al., COGNITIVE COMPUTATION, DOI: 10.1007/s12559-021-09983-x) discloses multi-branch bounding box regression that is composed of three cascaded stages based on two-stage object detection architecture. The document "Cascade R-CNN: Delving Into High Quality Object Detection" (CAI ZHAOWEI et al., 2018 IEEE/CVF CONFERENCE ON COMPUTER VISION AND PATTERN RECOGNITION, DOI: 10.1109/CVPR.2018.00644) discloses a multi-stage object detection framework which is designed for high quality object detectors.

SUMMARY

The invention is set out in the appended set of claims. A purpose of embodiments of the present application is to provide a model training method, a target detection method and a device, which can improve an accuracy of a target detection, a generalization and a data migration of a model that have been trained, thereby simultaneously ensuring an accuracy of labeling a position of a target object and an accuracy of classifying the target object.

In order to realize the technical solution, the present application is implemented as follows: in a first aspect, the present application provides a model training method. The method includes: obtaining a first reference bounding box from a first candidate bounding box set, and obtaining a real bounding box corresponding to the first reference bounding box and a real category of the real bounding box; obtaining a target detection model by inputting the first reference bounding box, the real bounding box and the real category into a model to be trained for an iterative model training until a result of the iterative model training meets a termination condition of the iterative model training; wherein, the model to be trained comprises a generation sub-model and a determination sub-model; each model training of the iterative model training comprises: the generation sub-model obtains a first prediction bounding box and a first prediction category by predicting based on the first reference bounding box; the determination sub-model generates a determination result set based on the real bounding box and the first prediction bounding box, as well as the real category and the first prediction category; the determination result set comprises a first determination result and a second determination result, and the first determination result represents a bounding box distribution similarity of the first prediction bounding box and the real bounding box under a condition that a constraint is met, the constraint being that a category of a target object in the first prediction bounding box is predicted as a target category that matches the real category by the generation sub-model, and the second determination result represents a category similarity between the first prediction category and the real category; determining a total loss value of the model to be trained based on the first determination result and the second determination result; and updating model parameters of the generation sub-model and model parameters of the determination sub-model based on the total loss value.

In another aspect, the present application provides a target detection method, the method comprises: obtaining a second reference bounding box from a second candidate bounding box set; obtaining a second prediction bounding box and a second prediction category of the second reference bounding box by inputting the second reference bounding box into a target detection model for a target detection; generating a target detection result of an image to be detected based on the second prediction bounding box and the second prediction category.

In another aspect, the present application provides a model training device, the device comprises: a first bounding box obtaining module configured to obtain a first reference bounding box from a first candidate bounding box set, and obtain a real bounding box corresponding to the first reference bounding box and a real category of the real bounding box; a model training module configured to input the first reference bounding box, the real bounding box, and the real category into a model to be trained for an iterative model training until a result of the iterative model training satisfy a termination condition of the iterative model training, and obtaining the target detection model; wherein the model to be trained comprises a generation sub-model and a determination sub-model; a specific implementation of each model training of the iterative model training comprises: the generation sub-model obtaining the first prediction bounding box and the first prediction category by predicting based on the first reference bounding box; the determination sub-model generates a determination result set based on the real bounding box and the first prediction bounding box, as well as the real category and the first prediction category; the determination result set comprising a first determination result and a second determination result, and the first determination result representing that a bounding box distribution similarity of the first prediction bounding box and the real bounding box under the first determination result meets a constraint, the constraint being that a category of a target object in the first prediction bounding box is predicted as a target category that matches the real category by the generation sub-model, the second determination result representing that a category similarity between the first prediction category and the real category; determining a total loss value of the model to be trained based on the first determination result and the second determination result; updating model parameters of the generation sub-model and model parameters of the determination sub-model based on the total loss value.

In another aspect, the present application provides a target detection device, the device comprises: a second bounding box obtaining module configured to obtain a second reference bounding box from a second candidate bounding box set; a target detection module configured to obtain a second prediction bounding box and a second prediction category of the second reference bounding box by inputting the second reference bounding box into a target detection model for a target detection; a detection result generation module configured to generate a target detection result of an image to be detected based on the second prediction bounding box and the second prediction category.

In another aspect, the present application provides a computer device, the device comprises: a processor; and a storage device arranged to store computer-executable instructions configured to be executed by the processor, the executable instructions comprising instructions for performing steps of the method.

In another aspect, the present application provides a storage medium, the storage medium being used to store computer-executable instructions, the executable instructions causing a computer to execute the steps of the method.

BRIEF DESCRIPTION OF THE DRAWINGS

In order to explain the embodiments of the present application or the technical solutions in the prior art more clearly, the drawings needed to be used in the description of the embodiments or the prior art will be briefly introduced below. Obviously, the drawings in the following description are only some of the one or more embodiments described in the present application. For those of ordinary skill in the art, other drawings can be obtained based on these drawings without exerting any creative effort.

FIG. 1 is a schematic flow chart of a model training method provided by an embodiment of the present application;
FIG. 2 is a schematic flow chart of each model training process in the model training method provided by the embodiment of the present application;
FIG. 3 is a schematic diagram of a first implementation principle of the model training method provided by the embodiment of the present application;
FIG. 4 a is a schematic diagram of a second implementation principle of the model training method provided by the embodiment of the present application;
FIG. 4b is a schematic diagram of a third implementation principle of the model training method provided by the embodiment of the present application;
FIG. 5 is a schematic flow chart of a target detection method provided by an embodiment of the present application;
FIG. 6 is a schematic diagram of an implementation principle of the target detection method provided by the embodiment of the present application;
FIG. 7 is a schematic diagram of a composition of modules of the model training device provided by the embodiment of the present application;
FIG. 8 is a schematic diagram of a composition of modules of the target detection device provided by the embodiment of the present application;
FIG. 9 is a schematic structural diagram of a computer device provided by an embodiment of the present application.

DESCRIPTION

In order to enable those skilled in the art to better understand one or more technical solutions in the present application, the technical solutions in the embodiments of the present application will be clearly and completely described below in conjunction with the drawings in the embodiments of the present application. Obviously, the described embodiments are only one or more partial embodiments of the present application, rather than all embodiments. Based on one or more embodiments of the present application, all other embodiments obtained by those of ordinary skill in the art without creative efforts should fall within the protection scope of the present application.

It should be noted that, without conflict, one or more embodiments and features in the embodiments of the present application can be combined with each other. The embodiments of the present application will be described in detail below with reference to the accompanying drawings and embodiments.

Considering that if a cross entropy regression loss between two bounding boxes is calculated directly based on a first prediction bounding box and a real bounding box, and then model parameters are iteratively trained based on the cross entropy regression loss, a target detection model that has been trained will be more dependent on a preset sample image set used in a model training phase, a generalization of the target detection model is poor, and a cross data transfer ability of the model is poor, which is bound to be that the target detection model has a high accuracy in predicting the bounding box in the preset sample image set, but has a low prediction accuracy in predicting the bounding box of a new image data to be detected. Therefore, in a model training stage, a determination sub-model is used to output a first determination result that represents a bounding box distribution similarity based on a real bounding box and a first prediction bounding box obtained from a first reference bounding box, prompting model parameters related to bounding box regression to be continuously updated, so as to prompt a generation sub-model to continuously learn a bounding box distribution, so that the first prediction bounding box is closer to the real bounding box, thereby improving an accuracy of predicting the bounding box at a location of a target object, a model generalization and a data transferability of a target detection model that has been trained, and thus ensure an accuracy of the bounding box regression of a new image that is to be detected using the target detection model, and improves the data migration adaptability of the trained target detection model when used for bounding box prediction; and considering that if it is directly to calculate a cross-entropy classification loss between two categories based on the first prediction category and the real category, and then iteratively trains model parameters based on the cross-entropy classification loss, a target detection model that is trained in such a way is more dependent on a preset sample image set used in the model training stage, and the target detection model has a poor generalization and poor cross-data migration capabilities, and resulting a problem that the target detection model has a high accuracy in classifying target objects in the preset sample image set, but has a low accuracy in classifying target objects in new image data to be detected. Based on this, in the model training stage, the determination sub-model is also used to output a second determination result representing a category similarity between a first prediction category and a real category based on the real category and the first prediction category of the first reference bounding box, so as to prompt the generation sub-model to continuously learn a category of a target object in an image area in the bounding box, so that the first prediction category is closer to the real category, since the model training process does not focus on the prediction category itself, but relies on an authenticity determination result of the determination sub-model, model parameters related to a prediction of the category of the target object are constantly updated, which improves the accuracy of the target classification, the model generalization and the data transferability of the target detection model that has been trained, so as to ensure the accuracy of using the target detection model to classify target objects in new images to be detected, and improves the data migration adaptability of the target detection model that has been trained when used for target object classification.

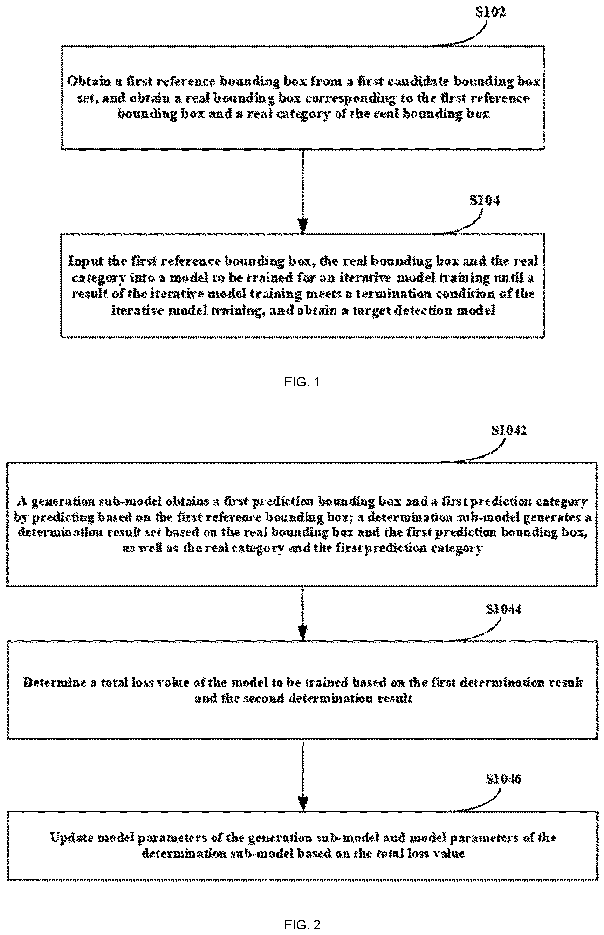

FIG. 1 is a schematic flowchart of a model training method provided by multiple embodiments of the present application. The method in FIG. 2 can be executed by an electronic device equipped with a model training device. The electronic device can be a terminal device or a designated server, among them, a hardware device for training the target detection model (i.e., the electronic device equipped with the model training device ) and a hardware device for a target detection (i.e., the electronic device equipped with a target detection device) may be the same or different; specifically, the training process of the target detection model, as shown in FIG. 1, this method at least includes the following steps: S102, obtaining a first reference bounding box from a first candidate bounding box set, and obtaining a real bounding box corresponding to the first reference bounding box and the real category of the real bounding box.

Among them, the first candidate bounding box set is obtained by extracting target areas from a preset sample image set using a preset region of interest extraction model. A number of the first reference bounding boxes can be a first designed number N, and N is a positive integer greater than 1;

For a determination process of the N first reference bounding boxes, it can be that for each round of model training, performing a step of extracting target areas from the preset sample image set using the preset region of interest extraction model to obtain the N first reference bounding boxes; it can also be performed in advance using the preset region of interest extraction model to extract the target areas from the preset sample image set, and then for each round of model training, N first reference bounding boxes are randomly sampled from a large number of pre-extracted candidate bounding boxes.

The preset sample image set may include a plurality of sample target objects, and each sample target object may correspond to a plurality of first reference bounding boxes. That is, the N first reference bounding boxes include at least one first reference bounding box corresponding to each sample target object.

Before the step S 102 obtaining the first designated number of first reference bounding boxes from the first candidate bounding box set, it also includes: inputting the preset sample image set into the preset region of interest extraction model to perform a region of interest extraction, and obtaining the first candidate bounding box set which includes a second designated number of candidate bounding boxes, the second designated number can be X, $X \geq N$, and X is a positive integer greater than 1, that is to say, for a case where X=N, i.e., the second designated number is equal to the first designated number, for each round of model training, the preset region of interest extraction model is used to perform the region of interest extraction on a plurality of sample image data in the preset sample image set to obtain the first designated number of first reference bounding boxes; for a case where X>N, i.e., the second designated number is greater than the first designated number, for each round of model training, the first designated number of first reference bounding boxes are obtained by randomly sampling from the first designated number of candidate bounding boxes.

Among them, considering that one of purposes in a model training process is to continuously learn the bounding box distribution through iterative training of model parameters, thereby improving the generalization and data transferability of the model (i.e., the model parameters do not depend on samples data used in the model training process, which can be better adapted to the data to be identified in the model application process). In order to promote the model to be trained to better learn the bounding box distribution, it is necessary to ensure that the extracted first reference bounding box input to the model to be trained obeys a certain probability distribution (such as a Gaussian distribution or a Cauchy distribution). Therefore, the larger the number N of anchor boxes extracted by using the preset region of interest extraction model, the more helpful it is for the model to be trained to learn the bounding box distribution better. However, if the preset region of interest extraction model (such as a region of interest extraction algorithm, ROI) is used in real time every time to extract X anchor boxes as the first reference bounding boxes and input into the model to be trained for model training, it will inevitably result in a relatively large amount of data processing and relatively high requirements for hardware equipment;

X anchor boxes can be extracted in advance using the preset region of interest extraction model. Then, in each round of model training, N anchor boxes are randomly sampled from X anchor boxes, the N anchor boxes are used as the first reference bounding boxes and are input into the model to be trained for model training. This can not only ensure a data processing volume of each round of model training, but also ensure that the model can better learn the bounding box distribution, that is, it can simultaneously take into account the data processing volume during model training and promote the learning of the bounding box distribution. Based on, the second designated number X is greater than the first designated number N, correspondingly, the step S102 obtaining the first designated number of the first reference bounding boxes from the first candidate bounding box set, specifically includes: randomly selecting the first designated number of candidate bounding boxes from the second designated number of candidate bounding boxes as the first reference bounding boxes, i.e., using the preset region of interest extraction model to extract regions of interest from the plurality of sample image data in the preset sample image set in advance, and obtaining X candidate bounding boxes; then, for each round of model training, randomly selecting N first reference bounding boxes sampled from the X candidate bounding boxes.

An optional implementation method includes, pre-extracting X anchor boxes (i.e., the second designated number of candidate bounding boxes), and then, for each round of model training, randomly sampling N anchor boxes (i.e., the first designated number of first reference bounding boxes) from the X anchor boxes, and then continue to perform the following step S104.

S104, inputting the first reference bounding box, the real bounding box and the real category into the model to be trained for an iterative model training until a result of the iterative model training meets a termination condition of the iterative model training, and obtaining the target detection model; the termination condition of the iterative model training may include: a current number of rounds of model training is equal to a total number of rounds of training, a model loss function converges, or a balance is reached between a generation sub-model and a determination sub-model.

Among them, for the iterative model training process in the step S104, the specific implementation process of the iterative model training is explained below. Since the processing process of each model training in the iterative model training process is the same, taking any one model training as an example for detailed explanation. Specifically, if the model to be trained includes the generation sub-model and the determination sub-model; as shown in FIG. 2, the specific implementation of each model training can include the following steps S1042 to step S1046:

S1042, the generation sub-model obtains a first prediction bounding box and a first prediction category by predicting based on the first reference bounding box; the determination sub-model generates a determination result set based on the real bounding box and the first prediction bounding box, as well as the real category and the first prediction category; among them, the determination result set includes a first determination result and a second determination result, and the first determination result represents a bounding box distribution similarity of the first prediction bounding box and the real bounding box under a constraint, and the constraint is that a category of the target object in the first prediction bounding box is predicted as a target category that matches a corresponding real category by the generation sub-model, and the second determination result represents a category similarity between the first prediction category of the first reference bounding box and the corresponding real category.

Since the generation sub-model is not only used to predict the bounding box based on the first reference bounding box and obtain the corresponding first prediction bounding box, but also used to predict the category of the target object in an image area within the first reference bounding box or the first prediction bounding box. Therefore, the model parameters of the generation sub-model include first model parameters related to bounding box regression and second model parameters related to a prediction of the category of the target object. Therefore, during the model training process, it is necessary to iteratively update the first model parameters and the second model parameters together, that is, iteratively update the first model parameters based on the first determination result of each first reference bounding box, and iteratively update the second model parameters based on the second determination result of each first reference bounding box.

For a determination process of the first determination result that represents the bounding box distribution similarity, a KL divergence between the real bounding box and the corresponding first prediction bounding box can be directly calculated. However, in specific implementation, considering that the determination sub-model can determine whether the first prediction bounding box predicted by the generation sub-model is real enough, when it is difficult to distinguish between the generated bounding box (i.e., the first prediction bounding box) and the real bounding box (i.e., the real bounding box), due to an existence of the determination sub-model, adjusting the model parameters based on the determination result of the determination sub-model can further promote the first prediction bounding box predicted by the generation sub-model to be closer to the real bounding box. Therefore, in order to further improve an accuracy of a regression loss component corresponding to the bounding box distribution similarity, and thereby ensure that the first prediction bounding box predicted by the target detection model is more realistic, for each first reference bounding box, it is also possible to use the determination sub-model to determine a determination probability of the real bounding box and the first prediction bounding box that are corresponding to the first reference bounding box respectively come from real data or generated data. Since a magnitude of the determination probability is related to a probability distribution proximity degree of the two bounding boxes (the real bounding box and the corresponding first prediction bounding box), therefore, the determination probability can characterize the distribution similarity between the real bounding box and the corresponding first prediction bounding box, so that a first regression loss component corresponding to a determination dimension considered from a perspective of the bounding box distribution similarity can be determined based on the determination probability, thereby prompting the model to learn the bounding box regression; specifically, for the real bounding box and the first prediction bounding box corresponding to a certain first reference bounding box, the determination sub-model determines the determination probability that the real bounding box comes from the real data, and determines the determination probability that the first prediction bounding box comes from the generated data, the greater the determination probability that the real bounding box comes from the real data, the greater the determination probability that the first prediction bounding box comes from the generated data, it means that the lower the probability distribution similarity of the prediction bounding box and the corresponding real bounding box, the greater the corresponding first regression loss component in terms of the determination dimension of the bounding box distribution similarity. Therefore, the distribution similarity of the first prediction bounding box and the real bounding box that are corresponding to the certain first reference bounding box is determined based on the determination probability, determined by the determination sub-model, that whether the real bounding box and the first prediction bounding box respectively come from the real data or the generated data, therefore, the first determination result can be generated based on the determination probability of the determination sub-model, so that the first determination result can represent the bounding box distribution similarity, and then the first regression loss component corresponding the determination dimension of the bounding box distribution similarity can be determined based on the determination probability in the first determination result.

In addition, since the generation sub-model can simultaneously perform the bounding box prediction and the category prediction, considering that the accuracy of the first reference bounding box for category prediction is low, the first prediction bounding box corresponding to such a first reference bounding box may not be able to truly reflects the accuracy of the bounding box prediction of the generation sub-model, and then the determination results of the determination sub-model for the first prediction bounding box and the real bounding box corresponding to such a first reference bounding box cannot truly reflect the accuracy of the bounding box prediction of the generation sub-model. Therefore, in the determination process of the first determination result that represents the bounding box distribution similarity, the constraint is introduced and used as a precondition (i.e., the first prediction category of the first reference bounding box satisfies a certain preset category matching constraint), the determination sub-model determines a conditional determination probability that the real bounding box comes from the real data, and a conditional determination probability that the first prediction bounding box comes from the generated data, i.e., under the condition that the category of the target object in the first prediction bounding box is predicted as the target category that matches the corresponding real category by the generation sub-model (that is, the first prediction category matches the real category), the determination sub-model determines the first determination probability that the real bounding box comes from the real data, and determines the second determination probability that the first prediction bounding box from the generated data, that is to say, only when the first prediction category of the first reference bounding box satisfies the constraint, the first determination result of the first reference bounding box be determined.

Correspondingly, for the determination process of the second determination result of the category similarity between the first prediction category and the real category, the cross entropy classification loss between the two categories can be calculated directly based on the first prediction category and the real category; however, in specific implementation, considering that the determination sub-model can determine whether the first prediction category predicted by the generation sub-model is real enough, when it is difficult to distinguish the generated target object category (i.e., the first prediction category) and the real target object category (i.e., the real category), due to the existence of the determination sub-model, adjusting the model parameters based on the determination result of the determination sub-model can further promote the first prediction category predicted by the generation sub-model to be closer to the real category. Therefore, in order to further improve the accuracy of the classification loss component corresponding to the category similarity, and ensures that the first prediction category predicted by the target detection model is more realistic, for each first reference bounding box, it is also possible to use the determination sub-model to determine the determination probability of the real category and the first prediction category of the first reference bounding box. respectively come from the real data or the generated data. Since the magnitude of the determination probability is related to the proximity of the two categories, the determination probability can characterize the category similarity between the real category and the corresponding first prediction category, so that the classification loss component corresponding to the first reference bounding box can be determined based on the determination probability, thereby prompting the model to perform target classification learning; specifically, for the real category and the first prediction category that are corresponding to a certain first reference bounding box, the determination sub-model determines the determination probability that the real category comes from the real data, and the determination sub-model determines the determination probability that the first prediction category comes from the generated data. The greater the determination sub-model's determination probability that the real category comes from the real data, the greater the determination probability of the first prediction category from the generated data, it means that the lower the category similarity between the first prediction category and the corresponding real category, the greater the classification loss component corresponding to the first reference bounding box, therefore, the category similarity between the first prediction category and the real category that are corresponding to the first reference bounding box is determined based on the determination probability of the determination sub-model regarding whether the real category and the first prediction category respectively come from the real data or the generated data. Therefore, the second determination result can be generated based on the determination probability of the determination sub-model, so that the second determination result can represent the category similarity, and then the classification loss component corresponding to the first reference bounding box can be determined based on the determination probability in the second determination result.

S1044, determining a total loss value of the model to be trained based on the first determination result and the second determination result;

Among them, the total loss value includes a regression loss value determined based on the first determination result of each first reference bounding box, and a classification loss value determined based on the second determination result of each first reference bounding box.

After obtaining the determination result set for each first reference bounding box, a sub-loss value corresponding to each first reference bounding box can be obtained. The sub-loss value at least includes a first regression loss component corresponding to a first determination dimension considered from a perspective of the bounding boxes distribution similarity, and a classification loss component corresponding to a classification determination dimension considered from the category similarity of the real category and the first prediction category; then, based on the sub-loss value corresponding to each first reference bounding box, the total loss value used to adjust the model parameters can be determined.

S1046, updating the model parameters of the generation sub-model and the model parameters of the determination sub-model based on the total loss value.

After determining the total loss value based on the sub-loss value corresponding to each first reference bounding box, a gradient descent method is used to adjust the parameters of the generation sub-model and the determination sub-model based on the total loss value; among them, due to the classification loss value related to the classification of the target object is obtained based on the determination probability of the determination sub-model, during the model training process, it does not pay attention to the prediction category itself, but relies on authenticity determination results of the determination sub-model to make the target classification of the target detection model final trained is more accurate. and, since the regression loss value related to bounding box prediction at least reflects the first regression loss component corresponding to the determination dimension of regression loss based on the bounding box distribution similarity, the target detection model finally trained can not only ensure that the probability distribution of the first prediction bounding box and the real bounding box is more closer.

During the model training process, the determination sub-model tries to distinguish whether the real bounding box and the first prediction bounding box that are corresponding to the first reference bounding box respectively come from real data or generated data, and try to distinguish whether the real category and the first prediction category of the first reference bounding box respectively come from real data or generated data, to minimize the regression classification loss of the model to be trained. In order to maximize a determination error of the determination sub-model, the generation sub-model is forced to continuously learn the bounding box distribution and a recognition of the category of the target object , prompting the generation sub-model and the determination sub-model to conduct multiple rounds of adversarial learning, thereby obtaining a more accurate generation sub-model as the target detection model.

It should be noted that to iteratively train the model parameters based on the total loss value of the model to be trained, and obtain the target detection model, please refer to an existing process of backpropagating model parameters using the gradient descent method to optimize the model parameters, which will not be described in detail here.

In addition, the target detection model trained based on the model training method provided by the embodiment of the present application can be applied to any specific application scenario that requires target detection on the image to be detected. For example, a specific application scenario 1, the target detection is performed on the images to be detected collected by an image capture device at an entrance of a certain public place (such as an entrance of a shopping mall, a subway entrance, an entrance to a scenic spot, or an entrance to a performance site, etc.). Another example is a specific application scenario 2, perform the target detection on the images to be detected collected by an image capture device at each monitoring point in a certain breeding base;

Among them, due to the different specific application scenarios of the target detection model, the preset sample image sets used in the training process of the target detection model are also different. For the specific application scenario 1, the preset sample image set can be historical sample images collected at the entrance of the designated public place within a preset historical time period, correspondingly, a target object enclosed by the first reference bounding box is a target user who entered the designated public place in the historical sample image, the real category and the first prediction category can be the category to which the target user belongs, such as at least one of an age group, a gender, a height, and an occupation; for specific application scenario 2, the preset sample image set can be historical sample images collected at each monitoring point in the designated breeding base within a preset historical time period, correspondingly , a target object enclosed by the first reference bounding box is a target breeding object in the historical sample image, and the real category and the first prediction category can be the category to which the target breeding object belongs, such as at least one of a living status and a body size.

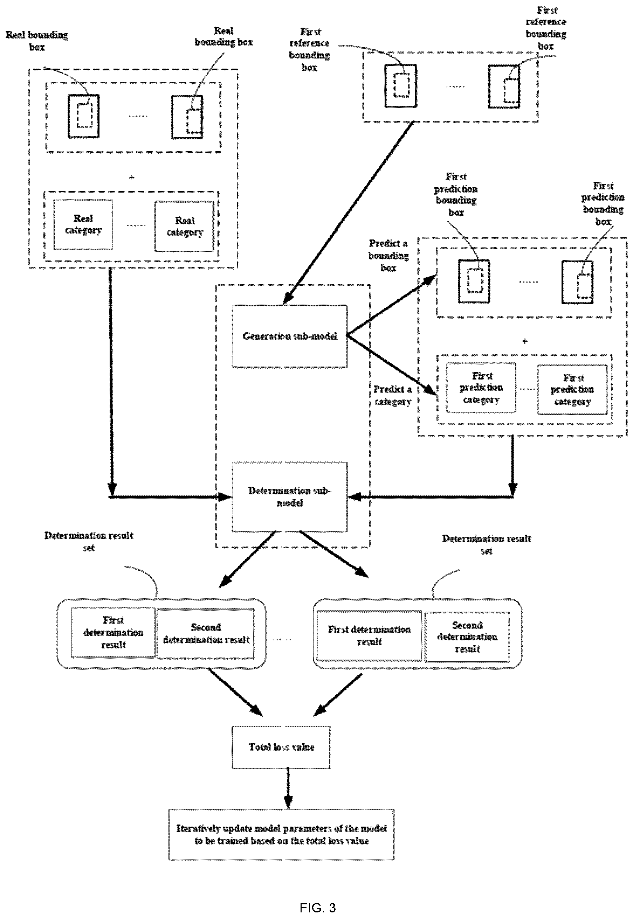

As shown in FIG. 3, a schematic diagram of the specific implementation principles of the training process of a target detection model is given, including:

Obtaining a first designated number of first reference bounding boxes, and obtain a real bounding box and a real category respectively corresponding to each first reference bounding box.

For each first reference bounding box: the generation sub-model obtains a first prediction bounding box by performing a bounding box prediction based on the first reference bounding box, and obtains a first prediction category by performing a target category prediction on an image area in the first reference bounding box or the first prediction bounding box; the determination sub-model generates a determination result set based on the real bounding box and the first prediction bounding box that are corresponding to the first reference bounding box, and the real category and the first prediction category that are corresponding to the first reference bounding box.

Based on the first determination result and the second determination result of each first reference bounding box, the total loss value of the model to be trained is determined.

Based on the total loss value, the model parameters of the model to be trained are iteratively updated until a current model training result meets a preset model training termination condition, and the target detection model is obtained.

The step S1042 specifically includes:

Obtaining a first determination result by determining an authenticity for the real bounding box and the first prediction bounding box, under a condition that the first prediction category of the first reference bounding box satisfies the constraint; and obtaining a second determination result by determining an authenticity for the real category and the first prediction category that are corresponding to the first reference bounding box.

In order to improve the accuracy of the regression loss corresponding to each first reference bounding box, and thereby improve the training accuracy of the model parameters, the bounding box regression loss is not only considered from the first determination dimension that represents the bounding box distribution similarity, but also considered from the second determination dimension that represents a degree of coincidence of bounding box coordinates. Based on this, the determination result set also includes a third determination result. The third determination result represents a degree of coincidence of bounding box coordinates between the first prediction bounding box and the real bounding box under the third determination result meets the constraint; correspondingly, the step S1042 specifically includes:

When the first prediction category of the first reference bounding box satisfies the constraint, obtaining the first determination result by determining an authenticity for the real bounding box and the first prediction bounding box.

Obtaining the second determination result by determining an authenticity for the real category and the first prediction category.

When the first prediction category satisfies the constraint, obtaining the third determination result by calculating a bounding box intersection over union loss based on the real bounding box and the first prediction bounding box corresponding to the first reference bounding box.

For the determination process of the third determination result that represents the degree of coincidence of bounding box coordinates, only an intersection over union loss between a certain real bounding box and the corresponding first prediction bounding box can be considered to obtain a target intersection over union loss; the intersection over union loss between the certain real bounding box and the corresponding first prediction bounding box, and the intersection over union loss between the certain real bounding box and the first prediction bounding box corresponding to another real bounding box can be comprehensive considered to determine the target intersection over union loss; since a magnitude of the target intersection over union loss can represent the degree of coincidence of coordinates between the real bounding box and the corresponding first prediction bounding box, therefore, based on the target intersection over union loss, the second regression loss component corresponding to the determination dimension considered from the perspective of the degree of coincidence of bounding box coordinates can be determined, thereby prompting the model to perform the bounding box regression learning; specifically, for the real bounding box and the first prediction bounding box corresponding to the certain first reference bounding box, determine the target intersection over union loss between the real bounding box and the first prediction bounding box, the greater the target intersection over union loss, the lower the degree of coincidence of coordinates between the first prediction bounding box and the corresponding real bounding box, the greater the second regression loss component corresponding to the determination dimension for the degree of coincidence of bounding box coordinates is, therefore, the degree of coincidence of coordinates between the first prediction bounding box and the corresponding real bounding box corresponding to the certain first reference bounding box is determined based on the target intersection over union loss between the real bounding box and the first prediction bounding box. Therefore, the third determination result can be generated based on the target intersection over union loss, so that the third determination result can represent the degree of coincidence of bounding box coordinates, and then the second regression loss component corresponding to the determination dimension of the degree of coincidence of bounding box coordinates can be determined based on the intersection over union loss in the third determination result.

In addition, since the third determination result is also used to determine a sub-regression loss value, therefore, in the determination process of the third determination result that represents the degree of coincidence of bounding box coordinates, the constraint is also introduced and used as a precondition (i.e., the first prediction category of the first reference bounding box satisfies a certain preset category matching constraint), and a conditional intersection over union loss between the real bounding box and the first prediction bounding box is determined, that is, under the condition that the category of the target object in the first prediction bounding box is predicted as a target category that matches the corresponding real category by the generation sub-model (i.e., the first prediction category matches the real category), the target intersection over union loss corresponding to the first reference bounding box is determined, that is to say, only when the first prediction category of the first reference bounding box satisfies the constraint, the third determination result of the first reference bounding box is determined.

Among them, for a case that the determination result set further includes the third determination result, the total loss value includes the regression loss value determined based on the first determination result and the third determination result of each first reference bounding box, and the regression loss value determined based on the second determination result of each first reference bounding box; specifically, after obtaining the determination result set for each first reference bounding box, the sub-loss value corresponding to each first reference bounding box can be obtained. The sub-loss value at least includes the first regression loss component corresponding to the first determination dimension considered from the perspective of the bounding box distribution similarity, the classification loss component corresponding to the classification determination dimension considered from the perspective of the category similarity between the real category and the first prediction category, and the second regression loss component corresponding to the second determination dimension considering the perspective of the degree of coincidence of bounding box coordinates; then, based on the sub-loss value corresponding to each first reference bounding box, the total loss value used to adjust the model parameters can be determined, that is, based on the first determination result and the second determination result of each first reference bounding box, the regression loss value is determined, and the first model parameters related to the bounding box regression are iteratively updated.

The sub-loss value corresponding to each first reference bounding box may include a sub-classification loss value and a sub-regression loss value, because the sub-regression loss value related to the bounding box prediction at least reflects the first regression loss component corresponding to the regression loss determination dimension based on the bounding box distribution similarity, and the second regression loss component corresponding to the regression loss determination dimension based on the degree of coincidence of bounding box coordinates. Therefore, the regression loss value used to adjust the model parameters also reflects the regression loss component respectively corresponding to the two regression loss determination dimensions, enables the final trained target detection model to not only ensure that the probability distribution of the predicted first prediction bounding box and the real bounding box is closer, but also to ensure that the degree of coincidence of coordinates of the first prediction bounding box and the real bounding box to be higher.

In the embodiment provided in the present application, it is also considered that if the model regression loss is determined only from a coarse-grained comparison dimension of the bounding box distribution similarity, and adjusting the model parameters, then the precise position learning of the bounding box cannot be taken into account, or if determining the model regression loss only from a fine-grained comparison dimension of the degree of coincidence of bounding box coordinates and adjusting the model parameters, then the problem of an edge ambiguity of the bounding box cannot be taken into account. Therefore, combining the coarse-grained comparison dimension of the bounding box distribution similarity and the fine-grained comparison dimension of the degree of coincidence of bounding box coordinates to determine the model regression loss, that is, the determination result set output by the determination sub-model includes not only the first determination result and the second determination result, but also the third determination result that represents the degree of coincidence of bounding box coordinates, and can achieve the effect of making up for the bounding box regression loss caused by similar bounding box distribution but a specific position deviates. In this way, based on the determination result set, the total loss value of the model to be trained is determined, and then the model parameters of the generation sub-model and the determination sub-model are updated iteratively in multiple rounds based on the total loss value, as a result, the total loss value obtained based on the determination result set is more accurate, making the updated model parameters based on the total loss value more accurate, thus further achieving improve the accuracy of marking the position of the target object during the target detection.

Considering that during the model training process, there may be situations where the gradient of the regression classification loss based on the determination result output by the determination sub-model suddenly decreases or even becomes zero. In order to further improve the accuracy of training the model parameters, a loss compensation value is introduced, based on this, the determination result set also includes a fourth determination result; correspondingly, the step S1042 specifically includes:

Obtaining the first determination result by determining an authenticity for the real bounding box and the first prediction bounding box, under the condition that the first prediction category satisfies the constraint.

Obtaining the second determination result by determining an authenticity for the real category and the first prediction category.

When the first prediction category satisfies the constraint, obtaining the third determination result by calculating the bounding box intersection over union loss based on the real bounding box and the first prediction bounding box.

Based on the real bounding box and the first prediction bounding box, obtaining a fourth determination result by calculating a loss compensation value for constraining a loss gradient of a loss function of the model to be trained.

Since the determination processes of the first determination result and the third determination result are both related to whether the first prediction category satisfies the preset category matching constraint, therefore, for the first reference bounding box that the first prediction category does not satisfy the preset category matching constraint, the first determination result and the third determination result are empty, or the corresponding determination result set only includes the second determination result and the fourth determination result, that is, only the second determination result and the fourth determination result of the first reference bounding box are considered that is to say, for the first reference bounding box that the first prediction category does not satisfy the preset category matching constraint, only the classification loss corresponding to such first reference bounding box will be counted, and the regression loss corresponding to such first reference bounding box will not be counted; correspondingly, for the first reference bounding box that the first prediction category satisfies the preset category matching constraint, not only the second determination result and the fourth determination result of the first reference bounding box are considered, also consider the first determination result and the third determination result of the first reference bounding box, that is, for the first reference bounding box that the first prediction category satisfies the preset category matching constraint, both the classification loss corresponding to the first reference bounding box and the regression loss corresponding to such first reference bounding box are considered.

For each first reference bounding box, the determination result set corresponding to the first reference bounding box not only includes the first determination result obtained from the perspective of the bounding box distribution similarity, the second determination result used to determine the classification loss and the third determination result obtained from the perspective of the degree of coincidence of bounding box coordinates, and further includes the loss compensation value used to constrain the loss gradient of the loss function. This can not only improve the accuracy of the total loss value, but also solve the problem that the loss gradient sudden decreases or even changes to be zero.

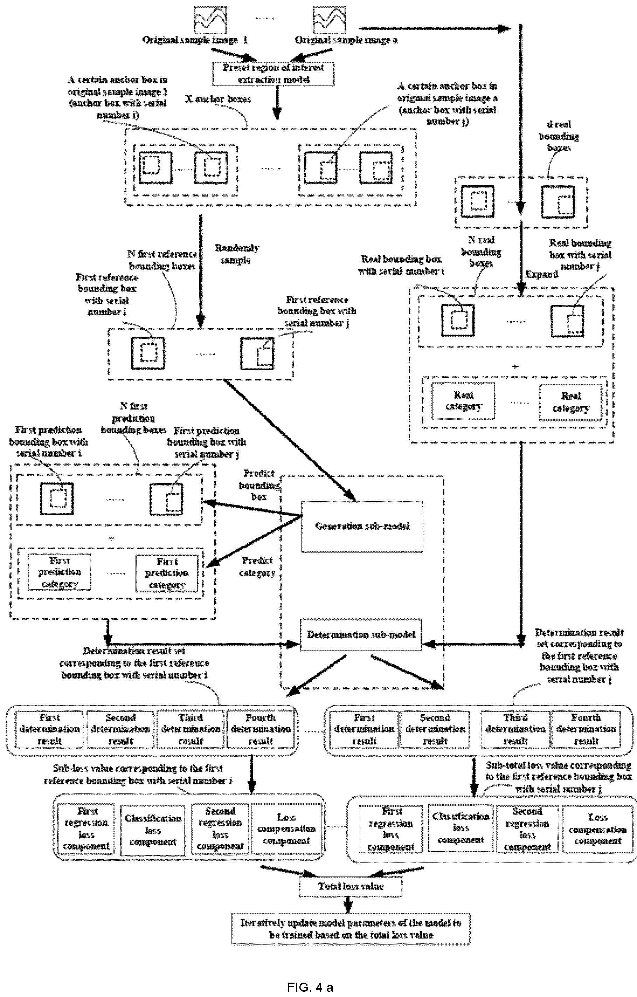

As shown in FIG. 4a, a schematic diagram of the specific implementation principle of the training process of another target detection model is given, including:

Preliminarily using a preset region of interest extraction model to extract target areas from a preset sample image set to obtain X anchor boxes; among them, the preset sample image set includes a plurality of original sample images, and each original sample image includes at least one target object; feature information corresponding to each anchor box can include position information ( x, y, w, h ) and category information c, that is ( x, y, w, h, c ); specifically, during the model training process, a plurality of parameter dimensions can be set to be independent to each other. Therefore, an iterative training process of model parameters for each dimension is also independent to each other.

For each round of model training, randomly sample N anchor boxes from X anchor boxes as the first reference bounding boxes, and determine a real bounding box and a real category corresponding to each first reference bounding box; among them, each target object in the preset sample image set can correspond to a real bounding box and a real category. For example, if a total number of target objects in the preset sample image set is d, then a number of real bounding boxes before expansion is d. In order to make the real bounding box corresponds to the first prediction bounding box, therefore, the real bounding boxes corresponding to a plurality of first reference bounding boxes including the same target object can be the same, that is, for the target object enclosed based on the first reference bounding box, the real bounding box is expanded to obtain N real bounding boxes ($N > d$); for example, a target object included in a certain original sample image is a cat A, and the cat A corresponds to a real bounding box A. If a number of first reference bounding boxes including the cat A is 4 (for example, first reference bounding boxes with serial numbers 6, 7, 8, and 9), then the real bounding box A is expanded to 4 real bounding boxes A (that is, real bounding boxes with serial numbers 6, 7, 8, 9), and the real categories corresponding to the four expanded real bounding boxes A are all cats.

For each first reference bounding box, the generation sub-model obtains the first prediction bounding box by performing a bounding box prediction based on the first reference bounding box, and obtains the first prediction category by performing a target category prediction on an image area in the first reference bounding box or the first prediction bounding box; the determination sub-model generates a determination result set based on the real bounding box and the first prediction bounding box corresponding to the first reference bounding box, and the real category and the first prediction category of the first reference bounding box; among them, each first reference bounding box corresponds to a real bounding box, and its corresponding real category, and a first prediction bounding box, and its corresponding first prediction category. The first prediction bounding box is predicted by the generation sub-model that continuously performs the bounding box regression learning, the first prediction category is predicted by the generation sub-model that continuously performs the target classification and recognition learning; specifically, the target objects enclosed by the first prediction bounding boxes with serial numbers 6, 7, 8, and 9 in the N first prediction bounding boxes output by the generation sub-model are cat A.

For each first reference bounding box, determine at least one of the following loss components: determining a first regression loss component based on the first determination result in the determination result set of the first reference bounding box, determining a classification loss component based on the second determination result in the determination result set of the first reference bounding box, determining a second regression loss component based on the third determination result in the determination result set of the first reference bounding box, and determining a loss compensation component based on the fourth determination result in the determination result set of the first reference bounding box; specifically, if the first reference bounding box does not meet the constraint, then the first determination result and the third determination result are empty, correspondingly, the first regression loss component and the second regression loss component are equal to zero, that is, the sub-regression loss value of the first reference bounding box is not considered, and only its sub-classification loss value and loss compensation value are considered.

Based on at least one of the first regression loss component, the classification loss component, the second regression loss component and the loss compensation component corresponding to each first reference bounding box, determine the total loss value of the model to be trained; use a stochastic gradient descent method, adjust the model parameters of the generation sub-model and the determination sub-model based on the total loss value, and obtain the generation sub-model and the determination sub-model of which the parameters have been updated.

If a current result of the iterative model training meets the termination condition of iterative model training, the updated generation sub-model is determined as the trained target detection model.

If the current result of the iterative model training does not meet the termination condition of iterative model training, the updated generation sub-model and the updated determination sub-model are determined as the mode to be trained used in a next round of model training until the termination condition of iterative model training is met.

During the model training process, for each round of model training, the model parameters of the determination sub-model can be adjusted based on the determination result set, and the model parameters of the generation sub-model can be adjusted based on the determination result set; however, during specific implementation, in order to improve the accuracy of training the model parameters of the generation sub-model, for each round of model training, the model parameters of the determination sub-model are adjusted t times based on the determination result set, and then the model parameters of the generation sub-model are adjusted one time based on the determination result set, the determination sub-model and the generation sub-model obtained after adjusting the parameters are set as the models to be trained in the next round.

Among them, the total loss value of the model to be trained is jointly determined based on the sub-loss values corresponding to the plurality of first reference bounding boxes, and the sub-loss value corresponding to each first reference bounding box is jointly determined based on the plurality of loss components. Based on this, the S1044 specifically includes:

Determining the sub-loss value corresponding to each first reference bounding box; the sub-loss value corresponding to each first reference bounding box is determined based on target information, among them, the target information includes at least one of the following: whether the first prediction category of the first reference bounding box satisfies the constraint, the bounding box distribution similarity represented by the first determination result of the first reference bounding box, the category similarity represented by the second determination result, the degree of coincidence of bounding box coordinates represented by the third determination result, and the loss compensation value represented by the fourth determination result.

Determining the total loss value of the model to be trained based on the sub-loss value corresponding to each first reference bounding box.

Among them, the sub-loss value corresponding to each first reference bounding box includes a sub-regression loss value and a sub-classification loss value. In specific implementation, the sub-loss value may further include a loss compensation value, or may not include the loss compensation value. The sub-regression loss value can be determined based on the first regression loss component, or can also be determined based on the first regression loss component and the second regression loss component. The sub-classification loss value is determined based on the classification loss component. Specifically, for a certain reference bounding box, if the first prediction category of the first reference bounding box does not meet the constraint, the target information used to determine the sub-loss value corresponding to the first reference bounding box may include: the category similarity represented by the second determination result, i.e., the sub-loss value corresponding to the first reference bounding box determined based on the classification loss component corresponding to the second determination result, that is, only the sub-loss value corresponding to the first reference bounding box is considered, but the sub-regression loss value corresponding to a first original bounding box is not considered ; or the target information used to determine the sub-loss value corresponding to the first reference bounding box may include: the category similarity represented by the second determination result and the loss compensation value represented by the fourth determination result, that is, the sub-loss value corresponding to the first reference bounding box is determined based on the classification loss component corresponding to the second determination result and the loss compensation component corresponding to the fourth determination result, that is, only the sub-classification loss value and the loss compensation value corresponding to the first reference bounding box are considered, but the sub-regression loss value corresponding to the first reference bounding box is not considered; if the first prediction category of the first reference bounding box satisfies the constraint, then the target information used to determine the sub-loss value corresponding to the first reference bounding box may include: the bounding box distribution similarity represented by the first determination result of the first reference bounding box, the category similarity represented by the second determination result, that is, the sub-loss value corresponding to the first reference bounding box is determined based on the first regression loss component corresponding to the first determination result and the classification loss component corresponding to the second determination result; or the target information used to determine the sub-loss value corresponding to the first reference bounding box may also include: the bounding box distribution similarity represented by the first determination result of the first reference bounding box, the category similarity represented by the second determination result, the degree of coincidence of bounding box coordinates represented by the third determination result, that is, based on the first regression loss component corresponding to the first determination result, the classification loss component corresponding to the second determination result, and the second regression loss component corresponding to the third determination result, determine the sub-loss value corresponding to the first reference bounding box, that is, the sub-classification loss value and the sub-regression loss value corresponding to the first reference bounding box are considered at the same time; or the target information used to determine the sub-loss value corresponding to the first reference bounding box may further include: the bounding box distribution similarity represented by the first determination result of the first reference bounding box, the category similarity represented by the second determination result, the degree of coincidence of the bounding box coordinates represented by the third determination result, the loss compensation value represented by the fourth determination result, that is, based on the first regression loss component corresponding to the first determination result, the classification loss component corresponding to the second determination result, the second regression loss component corresponding to the third determination result, and the loss compensation component corresponding to the fourth determination result, determine the sub-loss value corresponding to the first reference bounding box, that is, the sub-classification loss, the sub-regression loss value, and the loss compensation value corresponding to the first reference bounding box are considered at the same time.

Taking the first reference bounding box that satisfies the constraint and considering the loss compensation component as an example, the sub-loss value corresponding to the first reference bounding box is equal to a weighted sum of four loss components, which can be expressed specifically as,

$$V_i(D, G) = \lambda_1 V_{i1} + \lambda_2 V_{i2} + \lambda_3 V_{i3} + \lambda_4 V_{i4}$$

Among them, $\lambda_1$ represents a first weight coefficient corresponding to the first regression loss component under the first determination dimension, $V_{i1}$ represents the first regression loss component under the first determination dimension (that is, the regression loss component corresponding the degree of bounding box distribution similarity represented by the first determination result), $\lambda_2$ represents a second weight coefficient corresponding to the classification loss component, $V_{i2}$ represents the classification loss component (i.e., the classification loss component corresponding to the category similarity represented by the second determination result), $\lambda_3$ represents a third weight coefficient corresponding to the second regression loss component under the second determination dimension, $V_{i3}$ represents the second regression loss component under the second determination dimension (that is, the regression loss component corresponding to the degree of coincidence of the bounding box coordinates represented by the third determination result), $\lambda_4$ represents a fourth weight coefficient corresponding to the loss compensation value, $V_{i4}$ represents the loss compensation value (i.e., the loss compensation component); specifically, the first determination dimension can be a regression loss determination dimension based on the bounding box distribution similarity, and the second determination dimension can be the regression loss determination dimension based on the degree of coincidence of bounding box coordinates

For the plurality of first reference bounding boxes that satisfy the constraint, the first weight coefficient and the third weight coefficient may remain unchanged. However, considering that the first regression loss component and the second regression loss component respectively correspond to different regression loss determination dimension (i.e., the regression loss determination dimension based on the bounding box distribution similarity and the regression loss determination dimension based on the degree of coincidence of the bounding box coordinates), and the focuses considering the regression loss of different regression loss determination dimensions are also different ( For example, the regression loss determination dimension based on the bounding box distribution similarity focuses on the regression loss of the first reference bounding box corresponding to the real bounding box with blurred bounding box edges. The regression loss determination dimension based on the degree of coincidence of the bounding box coordinates focuses on considering the regression loss of the first reference bounding box with similar bounding box distribution but a specific position deviates), therefore, a magnitude relationship between the first regression loss component and the second regression loss component reflects to a certain extent which regression loss determination dimension can more accurately represent the regression loss between the real bounding box and the first prediction bounding box. Based on this, for each first reference bounding box, according to the magnitude relationship between the first regression loss component and the second regression loss component corresponding to the first reference bounding box, adjust the magnitudes of the first weight coefficient and the third weight coefficient; specifically, if an absolute value of a difference between the first regression loss component and the second regression loss component is not greater than a preset loss threshold, then the first weight coefficient and the third weight coefficient remain unchanged; if the absolute value of the difference between the first regression loss component and the second regression loss component is greater than the preset loss threshold and the first regression loss component is greater than the second regression loss component, then increase the first weight coefficient according to a first preset adjustment method; if the absolute value of the difference between the first regression loss component and the second regression loss component is greater than the preset loss threshold and the first regression loss component is less than the second regression loss component, increasing the third weight coefficient according to a second preset method , so as to achieve the effect that for each first reference bounding box during the model training process, a key refer to the effect of the regression loss component corresponding to the determination dimension of the bounding box regression loss that can better reflect the effect, thereby further improve the accuracy of model parameter optimization.

It should be noted that an increase range of the first weight coefficient corresponding to the first preset adjustment method and an increase range of the third weight coefficient corresponding to the second preset adjustment method may be the same or different, and the increase range of the weight coefficient may be set according to actual needs, and the present application does not limit this.

Among them, when the first prediction category satisfies the constraint, a process of obtaining the first determination result is considered from the determination dimension of the bounding box distribution similarity, the first determination result is obtained by determining an authenticity for the real bounding box and the first prediction bounding box corresponding to the first reference bounding box, including:

Step A1, determining a first determination probability that the determination sub-model determines that the real bounding box is true; and determining a second determination probability that the determination sub-model determines that the first prediction bounding box is fake.

Step A2, generating the first determination result based on the first determination probability and the second determination probability.

For the first reference bounding box that first prediction category satisfies the preset category matching constraint, a probability that the real bounding box corresponding to the first reference bounding box comes from real data is determined through the determination sub-model, that is, for the real bounding box, the determination sub-model determines an authenticity for the real bounding box and obtains the first determination probability that the real bounding box is predicted as the real data; similarly, determine a probability that the first prediction bounding box corresponding to the first reference bounding box comes from the generated data through the determination sub-model (that is, the value 1 minus the probability that the determination model determines that the first prediction bounding box comes from real data), that is, for the first prediction bounding box, the determination model determines an authenticity for the first prediction bounding box, and obtains the second determination probability that the first prediction bounding box is predicted as the generated data.

Since the determination sub-model compares the first probability distribution corresponding to the real bounding box and the second probability distribution corresponding to the first prediction bounding box from the perspective of the bounding box distribution similarity, so as to realize the authenticity determination of the real bounding box and the first prediction bounding box, and obtaining the corresponding determination probability, which can characterize the distribution similarity between the real bounding box and the corresponding first prediction bounding box. Therefore, after determining the first determination probability and the second determination probability, the first determination result can be obtained, among them, the first determination result can represent the bounding box distribution similarity; further, based on the first determination result, the first regression loss component corresponding to the determination dimension that represents the bounding box distribution similarity can be determined, among them, the greater the first determination probability and the second determination probability are, the lower the distribution similarity between the real bounding box and the corresponding first prediction bounding box corresponding to the first reference bounding box is. Therefore, the larger the first regression loss component corresponding to the first reference bounding box; then, the model parameters of the generation sub-model are updated based on the first regression loss component, so that a generation result of the generation sub-model can optimize the loss value of the model to be trained after being predicted by the determination sub-model, achieving the purpose of optimizing the generation sub-model, and improve an effect of bounding box prediction of the generation sub-model.

In order to improve the accuracy of the first determination result of each first reference bounding box, in the process of determining the sub-loss value based on the first determination result, the first regression loss component corresponding to the determination dimension of the bounding box distribution similarity can be improved, based on this, the step A2 specifically includes:

Step A21, determining a first weighted probability based on the first determination probability and a first prior probability of the real bounding box; and determining a second weighted probability based on the second determination probability and a second prior probability of the first reference bounding box.
Step A22, based on the first weighted probability and the second weighted probability corresponding to the first reference bounding box, generating the first determination result of the first reference bounding box.

In the process of determining the first determination result that represents the bounding box distribution similarity, the first prior probability of the real bounding box and the second prior probability of the first reference bounding box are considered, and the determination sub-model determines the authenticity for the real bounding box and the first prediction bounding box respectively, and the first determination probability and the second determination probability that are obtained are weighted to determine the first determination result (that is, the first determination result may include the first weighted probability and the second weighted probability), therefore, the first regression loss component related to the bounding box distribution similarity obtained based on the first determination result can be expressed as:

$$V_{i1} = p_{b_{ground}}^i * P_{i1} + p_{b_{anchor}}^i * P_{i2}$$

Among them, $p_{b_{ground}}^i$ represents a prior probability of an occurrence of the i-th real bounding box (i.e., the first prior probability), $P_{i1}$ represents the first determination probability that the i-th real bounding box is predicted to be true by the determination sub-model, and $p_{b_{anchor}}^i$ represents a prior probability of the occurrence of the i-th first reference bounding box (that is, the second prior probability), $P_{i2}$ represents the second determination probability that the i-th first prediction bounding box is predicted to be fake by the determination sub-model.

It should be noted that during specific implementation, $p_{b_{anchor}}^i$ can be the prior probability of the occurrence of the i-th first reference bounding box. Since the first prediction bounding box is predicted by the generation sub-model based on the first reference bounding box, therefore, $p_{b_{anchor}}^i$ can also be the prior probability of the occurrence of the i-th first prediction bounding box.

Since the probability of occurrence of the real bounding box and the prediction bounding box both obey a certain probability distribution, such as Gaussian distribution, the first prior probability and the second prior probability can be obtained by the following method:

$$p^i_{b_{ground}}\left(b^i_{ground}, \sigma_1\right) = \frac{1}{\sqrt{2\pi\sigma_1^2}} e^{\frac{\left(b^i_{ground} - \overline{b}_{ground}\right)^2}{2\sigma_1^2}}$$

Among them, $b^i_{ground}$ represents the real bounding box corresponding to the first reference bounding box with a serial number $i$, $\sigma_1$, represents a variance of a distribution probability of the first designated number of real bounding boxes, and $\overline{b}_{ground}$ represents a mean value of the distribution probability of the first designated number of real bounding boxes.

$$p^i_{b_{anchor}}\left(b^i_{anchor}, \sigma_2\right) = \frac{1}{\sqrt{2\pi\sigma_2^2}} e^{\frac{\left(b^i_{anchor} - \overline{b}_{anchor}\right)^2}{2\sigma_2^2}}$$

Among them, $b^i_{anchor}$ represents the first reference bounding box with the serial number $i$, $\sigma_2$ represents a variance of a distribution probability of the first designated number of first reference bounding boxes, and $\overline{b}_{anchor}$ represents a mean value of the distribution probability of the first designated number of first reference bounding boxes.

Among them, for the process of determining the second determination result that can represent the classification loss component corresponding to the first reference bounding box, that is, the process of obtaining the second determination result from the determination dimension of the category similarity of the bounding box, the second determination result is obtained by determining the authenticity for the real category corresponding to the first reference boundary box and the first prediction category, specifically includes:

Step B1, determining a third determination probability that the determination sub-model determines that the real category is true; and determining a fourth determination probability that the determination sub-model determines that the first prediction category is fake.

Step B2, generating the second determination result based on the third determination probability and the fourth determination probability.

For each first reference bounding box, use the determination sub-model to determine the probability that the real category corresponding to the first reference bounding box comes from real data. That is, for the real category, the determination sub-model determines an authenticity for the real category, and obtains the third determination probability of predicting the real category being real data; similarly, the probability of the first prediction category of the first reference bounding box being from generated data is determined by the determination sub-model (that is, the value 1 minus the probability that the first prediction category comes from real data determined by the determination sub-model), that is, for the first prediction category, the determination sub-model determines an authenticity for the first prediction category, and obtains the fourth determination probability of predicting that the first prediction category is the generated data.

Since the determination sub-model compares a third probability distribution corresponding to the real category and a fourth probability distribution corresponding to the first prediction category from the perspective of category similarity, so as to realize the authenticity determination on the real category and the first prediction category, and obtaining the corresponding determination probability, the determination probability can represent a category similarity between an actual class and a corresponding first prediction category. Therefore, after the third determination probability and the fourth determination probability are determined, the second determination result can be obtained, Among them, the second determination result can represent the category similarity; furthermore, based on the second determination result, the classification loss component can be determined. Among them, the greater the third determination probability and the fourth determination probability, the lower the category similarity between the actual class and the corresponding first prediction category, therefore, the greater the classification loss component corresponding to the first reference bounding box; then, the model parameters of the generation sub-model are updated based on the classification loss component, so that the generated result of the generation sub-model can optimize the loss value of the model to be trained after being predicted by the determination sub-model, thereby achieving the purpose of optimizing the generation sub-model and improving the accuracy of identifying the category of the target object of the generation sub-model.

In order to improve the accuracy of the second determination result of each first reference bounding box, so that in the process of determining the sub-loss value based on the second determination result, the accuracy of the classification loss component corresponding to the determination dimension of the category similarity between the first prediction category and the real category can be improved. Based on this, the step B2 specifically includes:

B21, determining a third weighted probability based on the third determination probability and the third prior probability that the category of the real bounding box is the real category; and determining a fourth weighted probability based on the fourth determination probability and the fourth prior probability that the category of the first reference bounding box is the real category.

B22, generating the second determination result of the first reference bounding box based on the third weighted probability and the fourth weighted probability.

In the process of determining the second determination result that represents the category similarity, considering the third prior probability that the category of the real bounding box is the real category and the fourth prior probability that the category of the first reference bounding box is the real category, the determination sub-model respectively determines an authenticity for the real category and the first prediction category, and weights the third determination probability and the fourth determination probability that are obtained to determine the second determination result (that is, the second determination result may include the third weighted probability and the fourth weighted probability), therefore, the classification loss component related to the category similarity obtained based on the second determination result can be expressed as:

$$V_{i2} = p^i_{b_{ground\_label}} * P_{i3} + p^i_{b_{anchor\_label}} * P_{i4}$$

Among them, $p^i_{b_{ground\_label}}$ represents the prior probability of the occurrence of the real category corresponding to the i-th first reference bounding box (i.e., the third prior probability), and $P_{i3}$ represents the third determination probability that the real category corresponding to the i-th first reference bounding box that is predicted to be true by the determination sub-model, $p^i_{b_{anchor\_label}}$ represents the prior probability of the occurrence of the first prediction category of the i-th first reference bounding box (that is, the fourth prior probability), $P_{i4}$ represents the fourth determination probability that the first prediction category of the i-th first reference bounding box is predicted to be fake by the determination model.

Since the probability of the occurrence of a certain category obeys a certain probability distribution, such as Gaussian distribution, the third prior probability and the fourth prior probability can be obtained in the following way:

$$p^i_{b_{ground\_label}}\left(b^i_{ground\_label}, \sigma_3\right) = \frac{1}{\sqrt{2\pi\sigma_3^2}} e^{\frac{\left(b^i_{ground\_label} - \overline{b}_{ground\_label}\right)^2}{2\sigma_3^2}}$$

Among them, $b^i_{ground\_label}$ represents the real category corresponding to the first reference bounding box with a serial number $i$, $\sigma_3$ represents the variance of the distribution probability of the real category corresponding to the first designated number of first reference bounding boxes, and $\overline{b}_{ground\_label}$ represents the mean value of the distribution probability of the real categories corresponding to the first designated number of first reference bounding boxes.

$$p^i_{b_{anchor\_label}}\left(b^i_{anchor\_label}, \sigma_4\right) = \frac{1}{\sqrt{2\pi\sigma_4^2}} e^{\frac{\left(b^i_{anchor\_label} - \overline{b}_{anchor\_label}\right)^2}{2\sigma_4^2}}$$

Among them, $b^i_{anchor\_label}$ represents the first prediction category of the first reference bounding box with the serial number i, $\sigma_4$ represents the variance of the distribution probability of the first prediction categories corresponding to the first designated number of first reference bounding boxes, $\overline{b}_{anchor\_label}$ represents the mean value of the distribution probability of the first prediction categories corresponding to the first designated number of reference bounding boxes.

The total loss value is equal to a sum of the sub-loss values corresponding to the first designated number of first reference bounding boxes. Specifically, it can be expressed as:

$$V(D,G) = \lambda_1 \sum_{i=1}^{N_{reg}} V_{i1} + \lambda_2 \sum_{i=1}^{N_{reg}} V_{i2} + \lambda_3 \frac{1}{N_{reg}} \sum_{i=1}^{N_{reg}} V_{i3} + \lambda_4 \frac{1}{N_{reg}} \sum_{i=1}^{N_{reg}} V_{i4}$$

Among them, $N_{reg}$ represents the first designated number, i represents the serial number of the first reference bounding box, and the value of i is from 1 to $N_{reg}$.

Among them, the process of obtaining the third determination result is considered from the determination dimension of the degree of coincidence of bounding box coordinates when the first prediction category satisfies the constraint, based on the real bounding box and the first prediction bounding box corresponding to the first reference bounding box, calculate the bounding box intersection over union loss to obtain the third determination result, which specifically includes:

Step C1, obtaining a first intersection over union loss by calculating the bounding box intersection over union loss for the real bounding box corresponding to the first reference bounding box and the first prediction bounding box corresponding to the first reference bounding box.

If the first prediction category of the first reference bounding box with serial number i satisfies the preset category matching constraint, then calculate the intersection over union loss between the real bounding box with serial number i and the first prediction bounding box with serial number i, and obtain the first intersection over union loss corresponding to the first reference bounding box with serial number i.

Step C2, based on the first intersection over union loss, determining the third determination result of the first reference bounding box.

Since the magnitude of the intersection over union loss between two bounding boxes can represent the degree of coincidence of the coordinates of the bounding boxes, the third determination result can be obtained based on the intersection over union loss between the real bounding box and the first prediction bounding box, thus based on the third determination result, the second regression loss component corresponding to the determination dimension considered from the perspective of the degree of coincidence of the bounding box coordinates is determined, thereby prompting the model to perform bounding box regression learning.

For the determination process of the third determination result, only the first intersection over union loss between the real bounding box and its corresponding first prediction bounding box can be considered. However, in order to improve the determination accuracy of the third determination result, thereby improving the accuracy of the second regression loss component corresponding to the determination dimension considered from the perspective of the degree of coincidence of the bounding box coordinates, thereby improving the accuracy of the total loss value used to adjust the model parameters, not only considering the first intersection over union loss between the real bounding box and its corresponding first prediction bounding box, but also considering the second intersection over union loss between the real bounding box and other first prediction bounding box. This can achieve a respective comparison between the real bounding box and a positive sample (i.e., the first prediction bounding box corresponding to a certain real bounding box learned through bounding box regression) and a negative sample (i.e., the first prediction bounding box corresponding to other real bounding boxes other than the certain real bounding box learned through bounding box regression ) on the determination dimension of the degree of coincidence of the bounding box coordinates, so as to learn the representation of the specific position of the real bounding box, thereby promoting the model to better perform bounding box regression learning. Based on this, the step C2 specifically includes:

C21, determining a comparison bounding box set from the first prediction bounding boxes corresponding to the first designated number of first reference bounding boxes.

Among them, the comparison bounding box set includes other first prediction bounding boxes other than the first prediction bounding box corresponding to the first reference bounding box, or other first prediction bounding boxes that do not include the target object enclosed by the first reference bounding box.

Taking the first prediction bounding box with serial number i of which the first prediction category satisfies the preset category matching constraint as an example, the comparison bounding box set may include other first prediction bounding boxes except the first prediction bounding box with serial number i (i.e., the first prediction bounding box with serial number k, k≠p, p = i), that is, except for the first prediction bounding box with serial number i, all other first prediction bounding boxes are regarded as the negative sample of the real bounding box with serial number i; in order to further improve an accuracy of selecting the negative sample, the comparison bounding box set can include other first prediction bounding boxes except the first prediction bounding box with the serial number i, and the other first prediction bounding boxes do not include the target object enclosed by the first reference bounding box with serial number i (that is, the first prediction bounding box with serial number k, k#p, p = i or p = j, the target object enclosed by the first prediction bounding box with serial number j is the same as the target object enclosed by the first reference bounding box with serial number i), that is to say, only taking other first prediction bounding boxes that include different target objects from the first reference bounding box with serial number i as the negative sample of the real bounding box with serial number i.

C22, respectively calculating the bounding box intersection over union loss between the real bounding box corresponding to the first reference bounding box and the other first prediction bounding boxes, to obtain the second intersection over union loss.

Taking the first reference bounding box with serial number i of which the first prediction category satisfies the preset category matching constraint as an example, for each other first prediction bounding box in the comparison bounding box set, calculate the intersection over union loss between the real bounding box with serial number i and the first prediction bounding box with sequence number k, and obtain the second intersection over union loss corresponding to the first prediction bounding box with sequence number k.

C23, based on the first intersection over union loss and the second intersection over union loss, determine the third determination result of the first reference bounding box.

In the process of determining the third determination result that represents the degree of coincidence of bounding box coordinates, the first intersection over union loss is calculated based on the real bounding box with serial number i and the first prediction bounding box with serial number i, and the second intersection over union loss (k#p) is calculated based on the real bounding box with serial number i and the first prediction bounding box with serial number k, so as to determine the third determination result (i.e., the third determination result can include the first intersection over union loss and the second intersection over union loss), then, based on the third determination result, the second regression loss component related to the degree of coincidence of bounding box coordinates can be determined. In this way, the model parameters can be adjusted based on the second regression loss component to make the degree of coincidences of coordinates of the real bounding box with serial number i and the first prediction bounding box with serial number i greater, which makes the degree of coincidences of coordinates of the real bounding box with serial number i and other first prediction bounding boxes smaller, thereby enhancing the global nature of the bounding box regression learning and further improving the accuracy of bounding box regression learning.

The second regression loss component is a logarithm of the target intersection over union loss. The target intersection over union loss is a quotient of an index of the first intersection over union loss and a sum of indices of multiple second intersection over union loss, that is, taking p= i as an example, the second regression loss component can be expressed as:

$$V_{i2} = \log \frac{exp\left(\text{IOULoss}\left(b^i_{ground}, G\left(b^i_{anchor}\middle|p^i_{ground\_label}; \theta_{g1}\right)\right)/\omega\right)}{\sum_{k=1}^{N_{reg}} \mathbb{1}(k \neq i) exp\left(\text{IOULoss}\left(b^i_{ground}, G\left(b^k_{anchor}\middle|p^i_{ground\_label}; \theta_{g1}\right)\right)/\omega\right)}$$

Among them, $b^i_{ground}$ represents the real bounding box corresponding to the first reference bounding box with the serial number i, $b^i_{anchor}$ represents the first reference bounding box with the serial number i, $\middle|p^i_{ground\_label}$ represents the first prediction category of the first reference bounding box with the serial number i satisfying the constraint, $G\left(b^i_{anchor}\middle|p^i_{ground\_label}; \theta_{g1}\right)$ represents the first prediction bounding box corresponding to the first reference bounding box with serial number i when the constraint is met, $\text{IOULoss}\left(b^i_{ground}, G\left(b^i_{anchor}\middle|p^i_{ground\_label}; \theta_{g1}\right)\right)$ represents the first intersection over union loss, $b^k_{anchor}$ represents the first reference bounding box with serial number k, $G\left(b^k_{anchor}\middle|p^i_{ground\_label}; \theta_{g1}\right)$ represents the first prediction bounding box corresponding to the first reference bounding box with serial number k when the constraint is met, $\text{IOULoss}\left(b^i_{ground}, G\left(b^k_{anchor}\middle|p^i_{ground\_label}; \theta_{g1}\right)\right)$ represents the second intersection over union loss, $\theta_{g1}$ represents the first model parameter related to bounding box regression in the generation sub-model, and correspondingly, $\theta_{g2}$ represents the second model parameter related to the target object category prediction, $\omega$ represents a preset adjustment factor.

Considering that in the process of the target detection, the generation sub-model not only needs to determine a location of the target object, but also needs to determine a specific category of the target object. Therefore, the model parameters of the generation sub-model in the model to be trained include the first parameter related to bounding box regression. The first model parameter and the second model parameter related to the target object category prediction, that is, the first model parameter and the second model parameter need to be iteratively updated during the model training process. Based on this, in order to further improve the accuracy of the total loss value, in the process of determining the sub-loss value corresponding to the first prediction bounding box, the preset category matching constraint is introduced, and only the real category corresponding to the first prediction bounding box matches the first prediction category, its corresponding sub-regression loss value and sub-classification loss value are considered, otherwise, only its corresponding sub-classification loss value is considered, that is, the sub- regression loss value corresponding to the first reference bounding box whose category prediction result does not meet the preset requirements is excluded. In the specific implementation, the generation sub-model performs category prediction on the first reference bounding box or the first prediction bounding box, and the output result may be a first category prediction result; among them, the first category prediction result includes a predicted probability that the target object enclosed by the first reference bounding box or the first prediction bounding box belongs to each candidate category. The candidate category corresponding to a maximum predicted probability is the first prediction category, that is, the category of the target object enclosed by the first reference bounding box or the first prediction bounding box is predicted by the generation sub-model to be the first prediction category, that is, the category of the target object of an image area within the first reference bounding box or the first prediction bounding box is predicted by the generation sub-model to be the first prediction category.

In addition, it should be noted that during specific implementation, considering that the position information of the first reference bounding box and the first prediction bounding box will not deviate greatly, the image features in the first reference bounding box are not deviate greatly from those in the first prediction bounding box. Therefore, it does not affect the recognition of the category of the target object in the image area within the bounding box, based on this, in the case where bounding box prediction and category prediction are performed one after another, the category prediction can be performed on the first prediction bounding box to obtain the corresponding first category prediction result, that is, first obtain the first prediction bounding box by predicting based on the first reference bounding box, and then perform category prediction on the first prediction bounding box to obtain the first category prediction result; and for the case where the bounding box prediction and the category prediction are executed simultaneously, when the bounding box prediction is performed based on the first reference bounding box, the category prediction is performed on the first reference bounding box together to obtain the corresponding first category prediction result, that is, obtains the first prediction bounding box by predicting based on the first reference bounding box, and perform the category prediction on the first reference bounding box to obtain the first category prediction result.

The preset category matching constraint may include: a constraint of a single matching method, or a constraint of changing the matching method, among them, the preset category matching constraint may be related to the first category prediction result. For the constraint of the single matching method, the category matching constraint used in each round of model training remain unchanged (i.e., it is not related to a current round of model training). For example, for each round of model training, if the real category is the same as the first prediction category, then determine that the first prediction category of the first reference bounding box matches the real category (i.e., the first prediction category satisfies the constraint, that is, the category of the target object in the first prediction bounding box is predicted by the generation sub-model to be the target category matching the real category); for the constraint of changing the matching method, the constraint of category matching used in each round of model training is related to a current number of model training rounds. Specifically, the constraint of changing the matching method can be divided into a category matching stage-type constraint, or a category matching gradient constraint.

Among them, the category matching stage constraint is that when the current number of model training rounds is less than a first preset round number, the real category and the first prediction category belong to a same category group, and when the current number of model training rounds is greater than or equal to the first preset round number, the real category is same as the first prediction category, that is, based on the category matching stage constraint and the first category prediction result corresponding to the first reference bounding box, a staged category matching constraint can be achieved; the category matching gradient constraint is that a sum of a first constraint term and a second constraint term is greater than a preset probability threshold, the first constraint term is the first prediction probability corresponding to the real category in a category prediction probability subset, and the second constraint term is a product of a sum of second predicted probabilities except the first predicted probability in the category prediction probability subset and a preset adjustment factor. The preset adjustment factor gradually decreases as the current number of model training rounds increases, that is, based on the category matching gradient constraint and the third The first category prediction result corresponding to the reference bounding box can realize the gradual category matching constraint; specifically, the category prediction probability subset is determined based on the first category prediction result corresponding to the first reference bounding box, and the category prediction probability subset includes the first predicted probability that the target object enclosed by the first prediction bounding box belongs to the real category, and the second predicted probability that it belongs to a non-real category in a target group, that is, the category prediction probability subset includes the first prediction probability under the real category in the target group obtained by the generation sub-model performing category prediction on the first reference bounding box or the first prediction bounding box, and the second predicted probability under the non-real category (that is, the candidate category other than the real category in the target group) in the target group, the target group is a category group where the real category is located; in the specific implementation, multiple candidate categories associated with a target detection task are predetermined, and based on semantic information of each candidate category, multiple candidate categories are divided into groups to obtain multiple category groups.

Considering that the first reference bounding box is obtained by extracting the region of interest using a preset region of interest extraction model, there may be an inaccuracy in the first reference bounding box (such as an enclosed target is incomplete), resulting in a problem that a category recognition for the first prediction bounding box corresponding to the first reference bounding box is inaccurate. Based on this, in the process of determining the sub-loss value corresponding to the first reference bounding box, refer to a matching relationship between the first prediction category of the first reference bounding box and the real category of the first reference bounding box, i.e., determine whether the first prediction bounding box satisfies the constraint based on the preset category matching constraint.

Since the generation sub-model is used for both bounding box prediction and target object category prediction, during the model training process, it is necessary to iteratively train the first model parameters related to bounding box regression and the second model parameters related to the target object category prediction in the generation sub-model, among them, it is also considered that it may be due to the low accuracy of the model parameters related to the prediction of the category of the target object in the generation sub-model in the early stage of model training, resulting in a problem that the category recognition of the first prediction bounding box corresponding to the first reference bounding box is inaccurate. Therefore, in the early stage of model training, requirements for category accuracy are relaxed, as long as the real category corresponding to the first prediction bounding box and the first prediction category belong to the same category group, it is determined that the constraint is met, and its corresponding sub-regression loss value is considered. In the later stage of model training, the requirements for category accuracy are tightened. Only when the real category corresponding to the first prediction bounding box is the same as the first prediction category, it is determined that the constraint is met, and considering the corresponding sub-regression loss value. Based on this, the preset category matching constraint can include: the constraint of the changing matching methods (such as category matching stage-type constraint, or category matching gradient constraint).

In order to ensure that a transition between the preset category matching constraint and the two category matching constraint branches that restrict the first prediction category to meet the constraint (i.e. the first prediction category belongs to the target group, the first prediction category is the same as the real category) is more smooth, so that as the number of rounds of model training increases, the preset category matching constraint gradually transform from limiting the first prediction category to fall into the target group to limiting the first prediction category to be the same as the real category. Based on this, optionally, the preset category matching constraint includes: the category matching gradient constraint.

In view of the situation where the preset category matching constraint is the category matching gradient constraint, still taking the first reference bounding box with the serial number i as an example, the category matching gradient constraint can be expressed as:

$$\left( p_{i_{\mathrm{real}_i}} + \beta \sum_{f \in \mathrm{groups} \backslash \mathrm{real}_i} p_{i_f} \right) \geq \mu$$

Among them, groups represents the target group, $\mathrm{real}_i$ represents the real category of the first reference bounding box with serial number i in the target group groups, $f \in \mathrm{groups} \backslash \mathrm{real}_i$ represents an unreal category in the target group, $\beta$ represents a prediction adjustment factor, $p_{i_{\mathrm{real}_i}}$ represents the first prediction probability (i.e. the first constraint term), $p_{i_f}$ represents the second prediction probability, $\beta \sum_{f \in \mathrm{groups} \backslash \mathrm{real}_i} p_{i_f}$ represents the second constraint term, $\mu$ represents the preset probability threshold; specifically, the larger $p_{i_{\mathrm{real}_i}}$ is, the closer the first prediction category is to the real category; because the preset adjustment factor decreases with the increasing of the current number of model training rounds, a reference proportion of the second constraint item gradually decreases, so that in the later stage of model training, whether the first prediction category matches the real category is mainly determined by the first constraint item (i.e., the first prediction probability under the real category), then after the number of current round of model training reaches a certain number of rounds of model training, the second constraint term becomes zero, that is, when $p_{i_{\mathrm{real}_i}}$ is greater than the preset probability threshold, it means that the generation sub-model determines the real category as the first prediction category.

For the preset adjustment factor, it decreases as the current number of model training rounds increases. If the current number of model training rounds is less than or equal to a target number of training rounds, then the second constraint term is positively related to the preset adjustment factor, the preset adjustment factor is negatively related to the current number of model training rounds; if the current number of model training rounds is greater than the target number of training rounds, then the second constraint is zero, among them, the target number of training rounds is less than the total number of training rounds.

In order to ensure the smoothness of the adjustment of the preset adjustment factor, a linear decreasing adjustment method can be used to gradually reduce the value of the preset adjustment factor $\beta$. Therefore, the

determination process of the preset adjustment factor used in current model training is specifically as follows:

(1) For a first round of model training, determine a first preset value as the preset adjustment factor used in current model training.

The first preset value can be set according to actual needs. In order to simplify the adjustment complexity, the first preset value can be set to 1, that is, the preset adjustment factor $\beta = 1$. That is, in the first round of model training, the category match gradient constraint can be:

$$\left( p_{i_{\text{real}_i}} + \Sigma_{f\in\text{groups}\backslash\text{real}_i} p_{i_f} \right), \text{ i.e., } \Sigma_{f\in\text{groups}} p_{i_f} \geq \mu;$$

That is to say, for the first round of model training, based on the sum of the first predicted probability and the second predicted probability corresponding to the target group, it is determined whether the first prediction category of the first reference bounding box matches the real category.

(2) For a non-first round of model training, determine the preset adjustment factor used in the current model training based on the current number of model training, the target number of training rounds and the first preset value according to a factor decreasing adjustment method.

If the preset adjustment factor $\beta$ corresponding to the first round of model training equals 1, then in the case of non-first round of model training, the category matching gradient constraint can be:

$$\left( p_{i_{\text{real}_i}} + \beta \Sigma_{f\in\text{groups}\backslash\text{real}_i} p_{i_f} \right) \geq \mu, \quad \beta < 1;$$

For the non-first round of model training, in the category match the gradient constraint, $\beta \Sigma_{f\in\text{groups}\backslash\text{real}_i} p_{i_f} < \Sigma_{f\in\text{groups}\backslash\text{real}_i} p_{i_f}$, and as the number of model training rounds increases, a participation degree of the second constraint $\beta \Sigma_{f\in\text{groups}\backslash\text{real}_i} p_{i_f}$ gradually decreases.

For example, a decreasing formula corresponding to the factor decreasing adjustment method can be:

$$\beta = \max\left( 1 - \frac{\delta - 1}{Z}, \ 0 \right)$$

Among them, $\max\left( 1 - \frac{\delta - 1}{Z}, \ 0 \right)$ represents the maximum value between ( $1 - \frac{\delta - 1}{Z}$ ) and 0. The first item 1 in the ( $1 - \frac{\delta - 1}{Z}$ ) represents the first preset value (i.e., the preset adjustment factor $\beta$ used in the first round of training), $\delta$ represents the current number of model training rounds, and $Z$ represents the target number of training rounds, that is, the target number of training rounds can be the total number of training rounds minus 1, or it can be a designated number of training rounds. The designated number of training rounds is less than the total number of training rounds. A difference between the total number of training rounds and the designated number of training rounds is a preset number of rounds Q, Q is greater than 2, that is, in the training process of a certain number of rounds (not the last round) in the later stage of model training, the preset adjustment factor $\beta$ will be set to 0, that is, in the later stage of model training, the determination conditions used in $\delta = Z+1$ round to the last round of model training are all $p_{i_{\text{real}_i}} \geq \mu$ .

It should be noted that for the situation where the target number of training rounds $Z$ is the total number of training rounds minus 1, the decreasing formula can be: $\beta = 1 - \frac{\delta - 1}{Z}$ , that is, in the last round of model training, the preset adjustment factor is set to 0, that is, the determination conditions used in the last round of model training are all $p_{i_{\text{real}_i}} \geq \mu$ ; in addition, the decrease formula shown above is only a relatively simple linear decrease adjustment method. In the actual application process, a deceleration rate for the preset adjustment factor $\beta$ can be set according to actual needs. Therefore, the deceleration formula does not constitute a limitation on the protection scope of this application.

In addition, the preset category matching constraint may not only be related to the first category prediction result, but also be related to the third determination probability and the fourth determination probability corresponding to the first reference bounding box; specifically, considering the sub-classification loss value corresponding to the first reference bounding box (i.e., classification loss component) is determined based on the third determination probability and the fourth determination probability. The third determination probability and the fourth determination probability can reflect the category similarity between the first prediction category and the real category, therefore, the preset category matching constraint can also be related to the third determination probability and the fourth determination probability corresponding to the first reference bounding box; specifically, the constraint of the single matching method can also be the third determination probability is less than a first value and the fourth determination probability is less than a second value (that is, it has nothing to do with the current number of model training rounds). Among them, the smaller the third determination probability and the fourth determination probability are, the smaller the corresponding sub-classification loss value is, indicating that it is difficult for the determination sub-model to distinguish the authenticity of the first prediction category and the authenticity of the real category, that is, the more similar the first prediction category is to the real category, it means that the category of the target object in the first prediction bounding box is predicted by the generation sub-model to be the target category matching the real category; correspondingly, the constraint of the change matching method can also be that when the current number of model training rounds is less than the first preset number of rounds, the third determination probability is less than a third value and the fourth determination probability is less than a fourth value, and when the current number of model training rounds is greater than or equal to the first preset number of rounds, the third determination probability is less than the first value and the fourth determination probability is less than the second value (that is, related to the current number of model training rounds), and the third value is greater than the first value, the fourth value is greater than the second value, that is, as the number of model training rounds increases, the first value and the second value that determine whether the preset category matching constraint is met become smaller, requiring the first prediction category to be closer to the real category, so as to achieve staged category matching constraint.

Among them, regarding the determination process of the loss compensation value, the calculation of the loss compensation value used to constrain the loss gradient of the loss function of the model to be trained is based on the real bounding box and the first prediction bounding box corresponding to the first reference bounding box, and the fourth determination result is obtained, specifically includes:

Step D1, based on the real bounding box and the first prediction bounding box, generating a synthetic bounding box corresponding to the first reference bounding box.

Taking the first reference bounding box with the serial number i as an example, according to a preset coordinate information sampling method, based on a first coordinate information set corresponding to the real bounding box with the serial number i and a second coordinate information set corresponding to the second prediction bounding box with the serial number i, determining a sampling coordinate information set; based on the sampling coordinate information set, determining the synthetic bounding box with serial number i.

Step D2, determining the loss compensation value based on the bounding box distribution similarity between the synthetic bounding box and the real bounding box.

Step D3, based on the loss compensation value, generating the fourth determination result of the first reference bounding box.

After the synthetic bounding box $b_p^i$ corresponding to the first reference bounding box with serial number i has been determined, calculate the bounding box distribution similarity between the synthetic bounding box with serial number i and the real bounding box with serial number i, i.e., $D\left(b_p^i; \theta_d\right)$, then calculate a compensation gradient with respect to the synthetic bounding box for the degree of coincidence of bounding box coordinates, i.e., $\nabla_{b_p^i} D(b_p^i; \theta_d)$, based on matrix two norm of the compensation gradient, the loss compensation value corresponding to the first reference bounding box with serial number i is determined.

For the determination process of the synthetic bounding box corresponding to a certain first reference bounding box, the step D1 specifically includes:

Step D11, determining a first coordinate information subset based on a first sampling ratio and the first coordinate information set of the real bounding box corresponding to the first reference bounding box.

Step D12, determining a second coordinate information subset based on a second sampling ratio and the second coordinate information set of the first prediction bounding box corresponding to the first reference bounding box; among them, it should be noted that the first sampling ratio and the second sampling ratio may be preset according to actual conditions, and a sum of the first sampling ratio and the second sampling ratio is equal to 1.

Step D13, generating the synthetic bounding box corresponding to the first reference bounding box based on the first coordinate information subset and the second coordinate information subset.

Still taking the first reference bounding box with serial number i as an example, according to the first sampling ratio, in the first coordinate information set of the real bounding box with serial number i, randomly sample to obtain the first coordinate information subset; and according to the second sampling ratio, in the second coordinate information set of the first prediction bounding box with serial number i, randomly sample to obtain the second coordinate information subset; determine a combination of the first coordinate information subset and the second coordinate information subset as a sampling coordinate information set, a bounding box drawn based on the sampling coordinate information set is the synthetic bounding box with serial number i; among them, since the synthetic bounding box is a bounding box by random sampling and mixing based on the coordinate information (that is, real data) of the real bounding box with serial number i and the coordinate information (i.e., generated data) of the first prediction bounding box with serial number i, therefore, part of the coordinate information of the synthetic bounding box comes from the real data, and the other coordinate information comes from the generated data, that is, he synthetic bounding box is determined by both real data and generated data and has a certain degree of randomness. This can compensate for the gradient of the total loss value when the gradient of the regression loss corresponding to the first determination dimension suddenly decreases or even becomes zero. This avoids the problem that the gradient of the regression loss corresponding to the first determination dimension suddenly decreases or even becomes zero during the model training process, causing the gradient of the total loss value to suddenly decrease, thereby further improving the training accuracy of the model parameters.

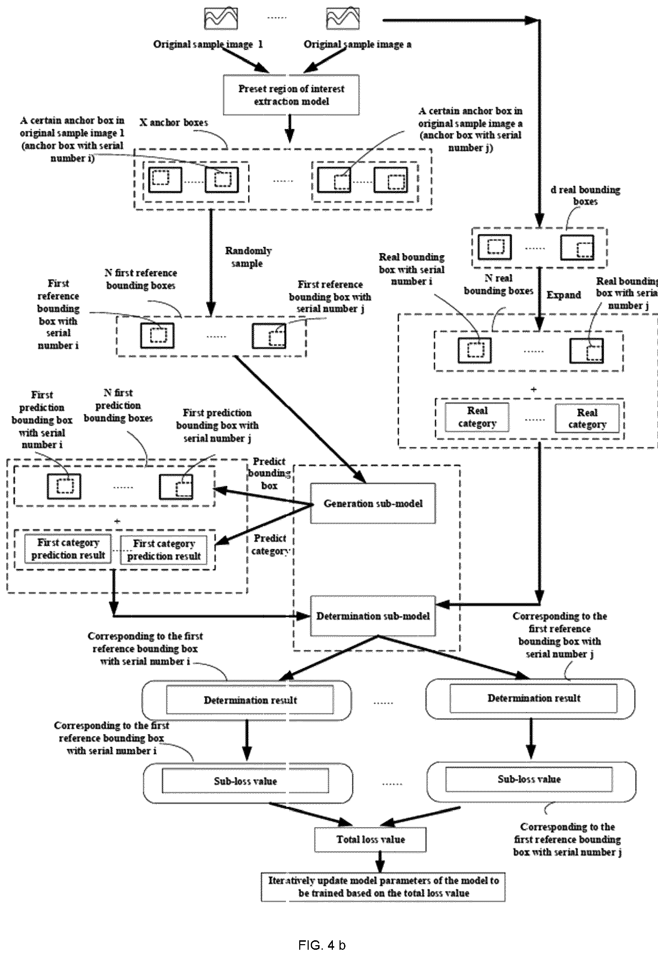

The model to be trained includes the generation sub-model and the determination sub-model, as shown in FIG. 4b, which provides a schematic diagram of the specific implementation principle of the training process of another target detection model, including:

(1) Obtaining X anchor boxes by use the preset region of interest extraction model to extract the target area from the preset sample image set in advance.
(2) For each round of model training, randomly sampling N anchor boxes from the X anchor boxes as the first reference bounding boxes, and determining the real bounding box and the real category corresponding to each first reference bounding box.
(3) For each first reference bounding box, the generation sub-model obtains the first prediction bounding box by performing the bounding box prediction based on the first reference bounding box, and obtains the first category prediction result by performing the target category prediction on the image area in the first reference bounding box or the first prediction bounding box; inputs the first prediction bounding box, the corresponding first category prediction result, the real bounding box and the corresponding real category into the determination sub-model; the determination sub-model generates the determination result set based on the real bounding box and the first prediction bounding box corresponding to the first reference bounding box, the real category and the first category prediction result corresponding to the first reference bounding box, and a certain preset category matching constraint.

Determine whether the first prediction category satisfies the constraint according to the preset category matching constraint; if the first prediction category does not satisfy the constraint, the determination result set includes the second determination result and the fourth determination result (in this case, the first determination result and the third determination result can be empty or preset information), correspondingly, determine the classification loss component based on the second determination result in the determination result set of the first reference bounding box, and determine the loss compensation component based on the fourth determination result in the determination result set of the first reference bounding box, and then determine the sub-loss value corresponding to the first reference bounding box based on the classification loss component and the loss compensation component; if the first prediction category satisfies the constraint, the determination result set includes the first determination result, the second determination result, the third determination result and the fourth determination result, correspondingly, determine the first regression loss component based on the first determination result in the determination result set of the first reference bounding box, determine the classification loss component based on the second determination result in the determination result set of the first reference bounding box; determine the second regression loss component based on the third determination result in the determination result set of the first reference bounding box, and determine the loss compensation component based on the fourth determination result in the determination result set of the first reference bounding box, and then determine the sub-loss value corresponding to the first reference bounding box based on the first regression loss component, the classification loss component, the second regression loss component and the loss compensation component.

It should be noted that, in the process of generating the determination result set corresponding to each first reference bounding box by the determination sub-model, it is considered whether the first prediction category and the real category satisfy the preset category matching constraint (that is, whether the first prediction category satisfies the constraint), in this way, for the situation where the first prediction category and the real category do not meet the preset category matching constraint, only the authenticity of the first prediction category and the authenticity of the real category are determined, and the second determination result is obtained, and the loss compensation value is calculated, and the fourth determination result is obtained without the need to distinguish the authenticity of the first prediction bounding box and the authenticity of the real bounding box, and the first determination result is obtained, and there is no need to calculate the intersection over union loss between the first prediction bounding box and the real bounding box, and the third determination result is obtained, that is, the first determination result and the third determination result are directly determined as empty or preset information, which can further improve the efficiency of model training.

That is to say, in the process of determining the determination result set corresponding to the first reference bounding box, the authenticity of the first prediction bounding box and the authenticity of the real bounding box can be directly determined to obtain the first determination result, the authenticity of the first prediction category and the authenticity of the real category can be performed and the second determination result is obtained. The intersection over union loss of the first prediction bounding box and the real bounding box is calculated to obtain the third determination result, and the loss compensation value is calculated to obtain the fourth determination result and the determination result set is generated; and then based on whether the first prediction category satisfies the constraint, determine whether to consider the first regression loss component and the second regression loss component corresponding to the first reference bounding box, that is, determine whether the corresponding sub-regression loss value is zero; also it may be first determined based on whether the first prediction category satisfies the constraint, to determine whether or not to directly set the corresponding first determination result and the third determination result to be empty or preset information, to obtain the determination result set, and then determine the corresponding sub-loss value based on the determination result set.

In addition, it should be noted that during specific implementation, the real category corresponding to each first reference bounding box can also be input into the generation sub-model, and the generation sub-model determines whether the first prediction category satisfies the constraint based on the preset category matching constraint, the real category and the first category prediction result; if the first prediction category does not satisfy the constraint, only the sub-classification loss value corresponding to the first reference bounding box is considered, and there is no need to calculate its corresponding sub-regression loss value. Therefore, there is no need to perform the bounding box prediction on the first reference bounding box, which can further reduce the data processing amount of the generation sub-model;

(4) Based on the sub-loss values corresponding to each first reference bounding box, determining the total loss value of the model to be trained; using the stochastic gradient descent method to adjust the model parameters of the generation sub-model and determination sub-model based on the total loss value, and obtaining the generation sub-model and determination sub-model of which parameters have been updated.

(5) If the current result of the iterative model training meet the termination condition of iterative model training, then the updated generation sub-model is determined as the trained target detection model; if the current result of the iterative model training does not meet the termination condition of iterative model training, then the generation sub-model and the determination sub-model that have been updated are determined as the model to be trained used in a next round of model training until the termination condition of iterative model training is met.

The model training method in the embodiment of the present application, in the model training stage, uses the determination sub-model to output the first determination result that represents the bounding box distribution similarity based on the real bounding box and the first prediction bounding box obtained from the first reference bounding box, prompting the model parameters related to bounding box regression to be continuously updated, so as to prompt the generation sub-model to continuously learn the bounding box distribution, so that the predicted first prediction bounding box is closer to the real bounding box, thereby improving the accuracy of prediction of the bounding box at the location of the object, the model generalization and the data transferability of the trained target detection model; and in the model training phase, the determination sub-model is also used to output the second determination result representing the category similarity between the prediction category and the real category based on the real category and the first prediction category of the first reference bounding box, so as to prompt the generation sub-model to continuously learn the category of the target object in the image area in the bounding box, so that the predicted first prediction category is closer to the real category, since the model training process does not focus on the prediction category itself, but relies on the results of the authenticity determination of the determination sub-model, the model parameters related to the prediction of the category of the target object are constantly updated, which improves the accuracy of the target classification of the trained target detection model, the model generalization and the data transferability; and the determination result set output by the determination sub-model includes the first determination result and the second determination result, so based on the determination result set, the total loss value of the model to be trained is determined, and then continuously iteratively update the model parameters of the generation sub-model and the determination sub-model based on the total loss value, for multiple rounds to ensure the accuracy of marking the position of the target object and the classification of the target object in the process of the target detection.

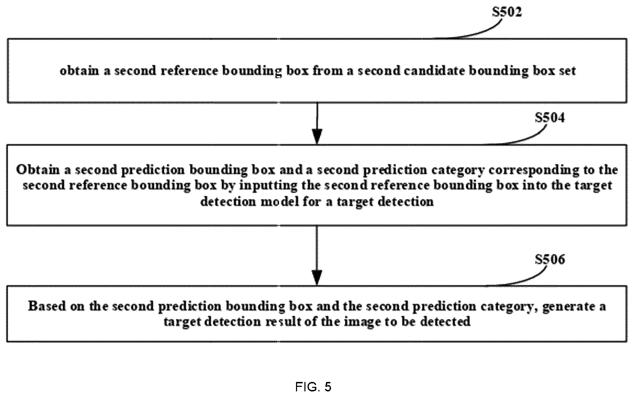

Corresponding to the model training method described in FIG. 1 to FIG. 4b, based on the same technical concept, embodiments of the present application also provide a target detection method. FIG. 5 is a schematic flow chart of the target detection method provided by the embodiment of the present application. The method in FIG. 5 can be executed by an electronic device provided with a target detection device. The electronic device may be a terminal device or a designated server, among them, a hardware device used for target detection (i.e., the electronic device provided with the target detection device) and the hardware device trained by the target detection model (i.e., the electronic device provided with the model training device) can be the same or different. As shown in FIG. 5, the method at least includes the following steps:

S502, obtaining a second reference bounding box from a second candidate bounding box set.

Among them, the second candidate bounding box set is obtained by extracting target areas of images to be detected using the preset region of interest extraction model, and a number of the second reference bounding boxes is a third designated number M.

The process of obtaining the third designated number of second reference bounding boxes may refer to the process of obtaining the first designated number of first reference bounding boxes, which will not be described again here.

S504, obtaining a second prediction bounding box and a second prediction category of the second reference bounding box by inputting the second reference bounding box into the target detection model for a target detection; among them, the target detection model is obtained by training based on the model training method, the detailed training process of the target detection model can be found in the above embodiments and will not be described again here.

The target detection model includes the generation sub-model; for each second reference bounding box: during the process of the target detection, the generation sub-model predicts based on the second reference bounding box, and obtains the second prediction bounding box and the second prediction category of the second reference bounding box; among them, since the model parameters of the generation sub-model include the first model parameters related to the bounding box regression and the second model parameters related to the target classification, the generation sub-model not only can predict a bounding box based on the second reference bounding box to obtain the second prediction bounding box corresponding to the second reference bounding box, but also can predict a category based on the second reference bounding box to obtain the second prediction category of the second reference bounding box.

The generation sub-model predicts the category for the second reference bounding box or the second prediction bounding box, and an output result may be a second category prediction result; among them, the second category prediction result includes a predicted probability that a target object enclosed by the second reference bounding box or the second prediction bounding box belongs to each candidate category, the candidate category corresponding to a maximum predicted probability is the second prediction category, i.e., the category of the target object enclosed by the second reference bounding box or the second prediction bounding box is predicted by the generation sub-model as the second prediction category, that is, a category of the target object in an image area within the second reference bounding box or the second prediction bounding box is predicted by the generation sub-model as the second prediction category; in addition, during the specific implementation, considering that position information of the second reference bounding box does not deviate greatly from position information of the second prediction bounding box, and image features in the second reference bounding box do not deviate greatly from image features in the second prediction bounding box. Therefore, it will not affect an identification of the category of the target object in the image area. Based on this, for a situation that a bounding box prediction and a category prediction are performed sequentially, the category prediction of the second prediction bounding box can be performed to obtain the corresponding second category prediction result, that is, first obtain the second prediction bounding box by predicting based on the second reference bounding box category prediction, and then obtain the second category prediction result by predicting the category for the second prediction bounding box; and for the situation where the bounding box prediction and the category prediction are executed simultaneously, it can also predict the category for the second reference boundary when predicting the bounding box based on the second reference bounding box, and obtain the corresponding second category prediction result, i.e., obtain the second prediction bounding box by predicting based on the second reference bounding box, and predict the category for the second reference bounding box, and obtain the second category prediction result.

S506, based on the second prediction bounding box and the second prediction category, generating a target detection result of the image to be detected.

Based on the second prediction bounding box and the second prediction category of each second reference bounding box, a number of target objects included in the image to be detected and the category to which each target object belongs can be determined. For example, the image to be detected includes a cat, a dog and a pedestrian.

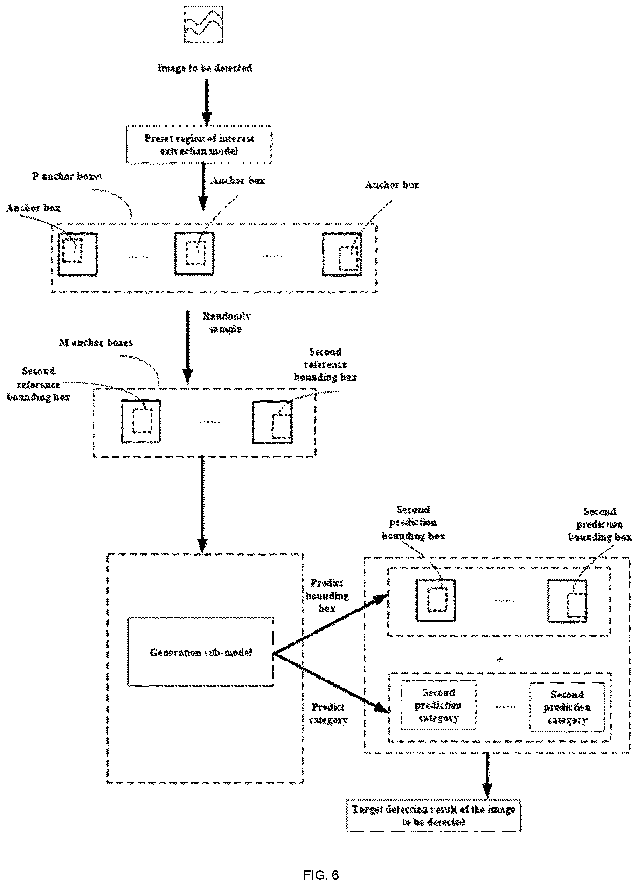

The target detection model includes the generation sub-model, as shown in FIG. 6, which provides a schematic diagram of the specific implementation principle of the process of the target detection, including:

Obtaining P anchor boxes by extracting target areas of the image to be detected using the preset region of interest extraction model.

M anchor boxes are randomly sampled from P anchor boxes as second reference bounding boxes.

For each second reference bounding box, the generation sub-model predicts a bounding box for the second reference bounding box to obtain a second prediction bounding box, and predicts a category for the second prediction bounding box to obtain the second prediction category.

Based on the second prediction bounding box and the second prediction category of each second reference bounding box, a target detection result of the image to be detected is generated.

It should be noted that the target detection model trained based on the model training method can be applied to any specific application scenario that requires the target detection on the image to be detected, among them, the image to be detected can be obtained by an image capture device set at a certain location. Correspondingly, the target detection device may belong to the image capture device, and may specifically be an image processing device in the image capture device. The image processing device receives the image to be detected transmitted by an image capture apparatus in the image capture device, and performs a target detection on the image to be detected; the target detection apparatus can also be a separate target detection device independent from the image capture device. The target detection device receives the image to be detected from the image capture device and performs the target detection on the image to be detected.

For specific application scenarios of the target detection, for example, the image to be detected can be collected by an image capture device installed at an entrance of a certain public place (such as an entrance of a shopping mall, a subway entrance, an entrance to a scenic spot, or an entrance to a performance site, etc.). Correspondingly, the target object to be detected in the image to be detected is a target user who enters the public place. The target detection model is used to perform the target detection on the image to be detected, so as to enclose a second prediction bounding box including the target user entering the public place in the image to be detected, and determine a second prediction category of the second prediction bounding box i.e., a category of the target user included in the second prediction bounding box, such as at least one of an age group, a gender, a height, and an occupation), and obtain the target detection result of the image to be detected; then, based on the target detection result, a user group identification result is determined (such as a flow of people entering the public place, or attributes of a user group entering the public place, etc.), and then, based on the user group identification result, a corresponding business processing can be executed (such as automatically triggering a prompt operation of limiting an entry, or pushing information to the target user, etc.); among them, the higher the accuracy of the model parameters of the target detection model, the more accurate the target detection of the image to be detected outputted by the target detection model, and the accuracy of the detection result is higher. Therefore, the accuracy of triggering the corresponding business processing based on the target detection result is higher.

The image to be detected can be collected by the image capture device installed at each monitoring point in a certain breeding base. Correspondingly, the target object to be detected in the image to be detected is a target breeding object in the monitoring point. Using the target detection model performs the target detection on the image to be detected to enclose the second prediction bounding box including the target breeding object in the image to be detected, and determine the second prediction category of the second prediction bounding box (that is, a category of the target breeding object included in the second prediction bounding box, such as at least one of a living status and a body size), and obtain the target detection result of the image to be detected; then, an identification result of a group of breeding objects is determined based on the target detection result (such as a survival rate of target breeding objects in the monitoring point, or a growth rate of target breeding objects in the monitoring point, etc.), and then perform a corresponding control operation based on the identification result of the group of breeding objects (if a decrease in the survival rate is detected, an alarm message is automatically issued, or if a decrease in the growth rate is detected, a feeding amount or a feeding frequency is automatically controlled to increase, etc.); among them, the higher the accuracy of the model parameters of the target detection model, the accuracy of the target detection result of the image to be detected output by the target detection model is higher, therefore, the higher the accuracy of triggering the corresponding control operation based on the target detection result.

The target detection method in the embodiment of the present application, during the process of the target detection, first uses the preset region of interest extraction model to extract multiple candidate bounding boxes, and then randomly samples a certain number of candidate bounding boxes among the multiple candidate bounding boxes as the second reference bounding boxes; for each second reference bounding box, the generation sub-model performs the bounding box prediction and the category prediction based on the second reference bounding box to obtain the second prediction bounding box and the second prediction category; then, generate the target detection result of the image to be detected based the second prediction bounding box and the second prediction category of on each second reference boundary ; among them, due to the training process of the model parameters of the generation sub-model, the determination sub-model outputs the first determination result representing the bounding box distribution similarity based on the real bounding box and the first prediction bounding box obtained from the first reference bounding box, which prompts the model parameters related to the bounding box regression to be continuously updated, so as to prompt the generation sub-model to continuously learn the bounding box distribution, so that the first prediction bounding box is closer to the real bounding box, thereby improving the accuracy of the trained target detection model in predicting the bounding box at the location of the target object, the model generalization and the data transferability; and in the model training stage, it also uses the determination sub-model to output the second determination result that represents the category similarity between the first prediction category and the real category based on the real category and the first prediction category of the first reference bounding box, so as to prompt the generation sub-model to continuously learn the category of the target object in the image area of the bounding box, make the predicted first prediction category closer to the real category. Since the prediction category itself is not paid attention to during the model training process, but the authenticity determination result of the determination sub-model is used to promote the model parameters related to the category prediction are constantly updated, which improves the accuracy of the target classification, the model generalization and the data transferability of the trained target detection model; and the determination result set output by the determination sub-model includes the first determination result and the second determination result, based on the such determination result set to determine the total loss value of the model to be trained, and then the model parameters of the generation sub-model and the model parameters of the determination sub-model are continuously updated for multiple rounds of iterations based on the total loss value to simultaneously ensure the accuracy of labeling the position of the target object and the accuracy of the classification of the target object during the process of the target detection.

It should be noted that this embodiment in the present application is based on a same technical concept as the previous embodiment in the present application. Therefore, for the specific implementation of this embodiment, please refer to the implementation of the aforementioned model training method, and repeated details will not be repeated.

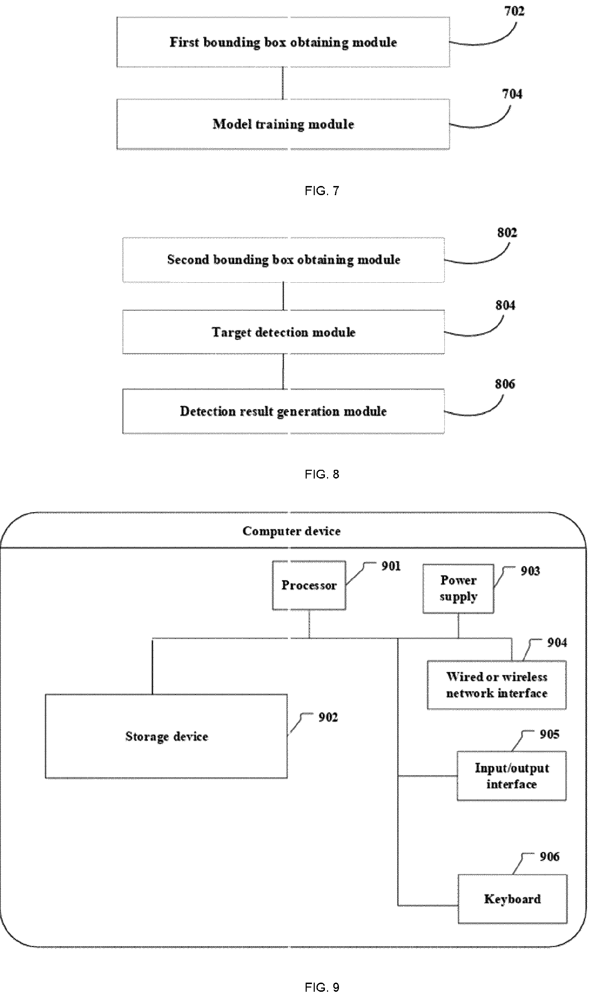

Corresponding to the model training method described in FIG. 1 to FIG. 4b, based on the same technical concept, embodiments of the present application also provide a model training device. FIG. 7 is a schematic diagram of the module composition of the model training device provided by the embodiment of the present application. The model training device is used to perform the model training method described in FIG. 1 to FIG. 4b. As shown in FIG. 7, the model training device includes:

A first bounding box obtaining module 702 is configured to obtain the first reference bounding box from the first candidate bounding box set, and obtain the real bounding box corresponding to the first reference bounding box and the real category of the real bounding box.

A model training module 704 is configured to input the first reference bounding box, the real bounding box and the real category into the model to be trained for an iterative model training until the result of the iterative model training satisfies the termination condition of the iterative model training, and obtain the target detection model; among them, the model to be trained includes the generation sub-model and the determination sub-model; each model training of the iterative model training includes:

The generation sub-model obtains the first prediction bounding box and the first prediction category by predicting based on the first reference bounding box; the determination sub-model generates the determination result set based on the real bounding box and the first prediction bounding box, as well as the real category and the first prediction category; the determination result set includes the first determination result and the second determination result, and the first determination result represents the bounding box distribution similarity of the first prediction bounding box and the real bounding box under the first determination result met the constraint, the constraint is that the category of the target object in the first prediction bounding box is predicted as the target category that matches the real category by the generation sub-model, the second determination result represents the category similarity between the first prediction category and the real category; based on the first determination result and the second determination result, the total loss value of the model to be trained is determined; based on the total loss value, update the model parameters of the generation sub-model and the model parameters of the determination sub-model.

During the model training phase, the model training device in the embodiment of the present application uses the determination sub-model to output the first determination result that represents the bounding box distribution similarity based on the real bounding box and the first prediction bounding box obtained from the first reference bounding box, prompting the model parameters related to the bounding box regression to be continuously updated, so as to prompt the generation sub-model to continuously learn the bounding box distribution, so that the first prediction bounding box is closer to the real bounding box, thereby improving the accuracy of predicting the bounding box at the location of the target object of the trained target detection model, the model generalization and the data transferability; and in the model training stage, the determination sub-model is also used to output the second determination result representing the category similarity between the first prediction category and the real category based on the real category and the first prediction category of the first reference bounding box, so as to prompt the generation sub-model to continuously learn the category of the target object in the image area in the bounding box, so that the first prediction category is closer to the real category, since the model training process does not focus on the prediction category itself, but relies on the authenticity determination result of the determination sub-model, the model parameters related to the prediction of the category of the target object are constantly updated, which improves the accuracy of the target classification, the model generalization and the data transferability of the trained target detection model; and the determination result set output by the determination sub-model includes the first determination result and the second determination result, so based on the determination result set, the total loss value of the model to be trained is determined, and then continuously iteratively update the model parameters of the generation sub-model and the model parameters of the determination sub-model based on the total loss value for multiple rounds to ensure the accuracy of labeling the position of the target object and the accuracy of the classification of the target object during the process of the target detection.

It should be noted that the embodiment of the model training device in the present application and the specific embodiment of the model training method in the present application are based on the same inventive concept. Therefore, for the specific implementation of this embodiment, please refer to the implementation of the corresponding model training method mentioned above. The repetitive parts will not be repeated.

Corresponding to the target detection method described in FIG. 5 to FIG. 6 above, based on the same technical concept, embodiments of the present application also provide a target detection device. FIG. 8 is a schematic diagram of the module composition of the target detection device provided by the embodiment of the present application. The target detection device is used to perform the target detection method described in FIG. 5 to FIG. 6. As shown in FIG. 8, the target detection device includes:

A second bounding box obtaining module 802 is configured to obtain a second reference bounding box from the second candidate bounding box set.

A target detection module 804 is configured to obtain the second prediction bounding box and the second prediction category of the second reference bounding box by inputting the second reference bounding box into the target detection model for the target detection.

A detection result generation module 806 is configured to generate the target detection result of the image to be detected based on the second prediction bounding box and the second prediction category.

During the process of the target detection, The target detection device in the embodiment of the present application first extracts multiple candidate bounding boxes using the preset region of interest extraction model, and then randomly samples a certain number of candidate bounding boxes among the multiple candidate bounding boxes as the second reference bounding boxes; for each second reference bounding box, the generation sub-model performs the bounding box prediction and the category prediction based on the second reference bounding box to obtain the second prediction bounding box and the second prediction category; then, generates the target detection result of the image to be detected based on the second prediction bounding box and the second prediction category of each second reference bounding box ; among them, due to the training process of the model parameters of the generation sub-model, the determination sub-model outputs the first determination result representing the bounding box distribution similarity based on the real bounding box and the first prediction bounding box obtained from the first reference bounding box, which prompts the model parameters related to the bounding box regression to be continuously updated, so as to prompt the generation sub-model to continuously learn the bounding box distribution, so that the predicted first bounding box is closer to the real bounding box, thereby improving the accuracy of predicting the bounding box at the location of the target object, the model generalization and the data transferability of the trained target detection model; and in the model training stage, it also uses the determination sub-model to output the second determination result that represents the category similarity between the first prediction category and the real category based on the real category and the first prediction category of the first reference bounding box, so as to prompt the generation sub-model to continuously learn the category of the target object in the image area of the bounding box, and makes the predicted first prediction category closer to the real category. Since the model training process does not pay attention to the prediction category itself, but relies on the authenticity determination result of the determination sub-model to promote the model parameters related to the category prediction are constantly updated, which improves the accuracy of the target classification, the model generalization and the data transferability of the trained target detection model; and the determination result set output by the determination sub-model includes the first determination result and the second determination result, determine the total loss value of the model to be trained based on the determination result set, and continuously iteratively update the model parameters of the generation sub-model and the model parameters of the determination sub-model based on the total loss value for multiple rounds to ensure the accuracy of labeling the position of the target object and the accuracy of the classification of the target object during the process of the target detection.

It should be noted that the embodiment of the target detection device in the present application and the specific embodiment of the target detection method in the present application are based on the same inventive concept. Therefore, for the specific implementation of this embodiment, please refer to the implementation of the corresponding target detection method mentioned above. The repetitive parts will not be repeated.

Corresponding to the methods shown in FIG. 1 to FIG. 6 above, based on the same technical concept, embodiments of the present application also provide a computer device, which is used to execute the model training method or target detection method, as shown in FIG. 9.

A computer device may vary greatly due to a different configuration or a different performance, and may include one or more processors 901 and a storage device 902, and the storage device 902 may store one or more application programs for storage or data. Among them, the storage device 902 may be a temporary storage or a persistent storage. The application program stored in the storage device 902 may include one or more modules (not shown in the figure), and each module may include a series of computer-executable instructions on the computer device. The processor 901 may be configured to communicate with the storage device 902 to execute a series of computer-executable instructions in the storage device 902 on the computer device. The computer device may also include one or more power supplies 903, one or more wired or wireless network interfaces 904, one or more input-output interfaces 905, one or more keyboards 906, etc.

In one embodiment, the computer device includes a storage device and one or more programs, among them, the one or more programs are stored in the storage device, and the one or more programs may include one or more modules, and each module may include a series of computer-executable instructions in the computer device configured to be executed by one or more processors, the one or more programs include computer-executable instructions for:

Obtaining a first reference bounding box from a first candidate bounding box set, and obtaining a real bounding box corresponding to the first reference bounding box and a real category of the real bounding box; obtaining a target detection model by inputting the first reference bounding box, the real bounding box and the real category into a model to be trained for an iterative model training until a result of the iterative model training meets a termination condition of the iterative model training; among them, the model to be trained includes a generation sub-model and a determination sub-model; each model training of the iterative model training includes: the generation sub-model obtains a first prediction bounding box and a first prediction category by predicting based on the first reference bounding box; the determination sub-model generates a determination result set based on the real bounding box and the first prediction bounding box, as well as the real category and the first prediction category; the determination result set includes a first determination result and a second determination result, and the first determination result represents a bounding box distribution similarity of the first prediction bounding box and the real bounding box under a condition that a constraint is met, the constraint is that a category of a target object in the first prediction bounding box is predicted as a target category that matches the real category by the generation sub-model, and the second determination result represents a category similarity between the first prediction category and the real category; determining a total loss value of the model to be trained based on the first determination result and the second determination result; and updating model parameters of the generation sub-model and model parameters of the determination sub-model based on the total loss value.

In another embodiment, the computer device includes a storage device and one or more programs, among them, the one or more programs are stored in the storage device, and the one or more programs may include one or more modules, and each module may include a series of computer-executable instructions in a computer device configured to be executed by one or more processors, to perform the following:

Obtaining a second reference bounding box from a second candidate bounding box set; obtaining a second prediction bounding box and a second prediction category of the second reference bounding box by inputting the second reference bounding box into the target detection model for a target detection; generating a target detection result of the image to be detected based on the second prediction bounding box and the second prediction category.

During the model training phase, the computer device in the embodiment of the present application uses the determination sub-model to output the first determination result that represents the bounding box distribution similarity based on the real bounding box and the first prediction bounding box obtained from the first reference bounding box, prompting the model parameters related to the bounding box regression to be continuously updated, so as to prompt the generation sub-model to continuously learn the bounding box distribution, so that the first prediction bounding box is closer to the real bounding box, thereby improving the accuracy of predicting the bounding box at the location of the target object of the trained target detection model, the model generalization and the data transferability; and in the model training stage, the determination sub-model is also used to output the second determination result representing the category similarity between the first prediction category and the real category based on the real category and the first prediction category of the first reference bounding box, so as to prompt the generation sub-model to continuously learn the category of the target object in the image area in the bounding box, so that the first prediction category is closer to the real category, since the model training process does not focus on the prediction category itself, but relies on the authenticity determination result of the determination sub-model, the model parameters related to the prediction of the category of the target object are constantly updated, which improves the accuracy of the target classification, the model generalization and the data transferability of the trained target detection model; and the determination result set output by the determination sub-model includes the first determination result and the second determination result, so based on the determination result set, the total loss value of the model to be trained is determined, and then continuously iteratively update the model parameters of the generation sub-model and the model parameters of the determination sub-model based on the total loss value for multiple rounds to ensure the accuracy of labeling the position of the target object and the accuracy of the classification of the target object during the process of the target detection.

It should be noted that the embodiment of the computer device in the present application and the specific embodiment of the model training method in the present application are based on the same inventive concept. Therefore, for the specific implementation of this embodiment, please refer to the implementation of the corresponding model training method mentioned above. Repeated parts are no longer described.

Corresponding to the methods shown in FIG. 1 to FIG. 6 above, based on the same technical concept, embodiments of the present application also provide a storage medium for storing computer-executable instructions. In one embodiment, the storage medium can be U disk, optical disk, hard disk, etc. When the computer-executable instructions stored in this storage medium are executed by the processor, the following process can be achieved:

Obtaining a first reference bounding box from a first candidate bounding box set, and obtaining a real bounding box corresponding to the first reference bounding box and a real category of the real bounding box; obtaining a target detection model by inputting the first reference bounding box, the real bounding box and the real category into a model to be trained for an iterative model training until a result of the iterative model training meets a termination condition of the iterative model training; among them, the model to be trained includes a generation sub-model and a determination sub-model; each model training of the iterative model training includes: the generation sub-model obtains a first prediction bounding box and a first prediction category by predicting based on the first reference bounding box; the determination sub-model generates a determination result set based on the real bounding box and the first prediction bounding box, as well as the real category and the first prediction category; the determination result set includes a first determination result and a second determination result, and the first determination result represents a bounding box distribution similarity of the first prediction bounding box and the real bounding box under a condition that a constraint is met, the constraint is that a category of a target object in the first prediction bounding box is predicted as a target category that matches the real category by the generation sub-model, and the second determination result represents a category similarity between the first prediction category and the real category; determining a total loss value of the model to be trained based on each first determination result and each second determination result; and updating model parameters of the generation sub-model and model parameters of the determination sub-model based on the total loss value.

In another embodiment, the storage medium can be a USB disk, an optical disk, a hard disk, etc. When the computer-executable instructions stored in the storage medium are executed by the processor, the following process can be implemented:

Obtaining a second reference bounding box from a second candidate bounding box set; obtaining a second prediction bounding box and a second prediction category of the second reference bounding box by inputting the second reference bounding box into the target detection model for a target detection; generating a target detection result of the image to be detected based on the second prediction bounding box and the second prediction category.

When the computer-executable instructions stored in the storage medium in the embodiment of the present application are executed by the processor, during the model training phase, the determination sub-model is used to output the first determination result that represents the bounding box distribution similarity based on the real bounding box and the first prediction bounding box obtained from the first reference bounding box, prompting the model parameters related to the bounding box regression to be continuously updated, so as to prompt the generation sub-model to continuously learn the bounding box distribution, so that the first prediction bounding box is closer to the real bounding box, thereby improving the accuracy of predicting the bounding box at the location of the target object of the trained target detection model, the model generalization and the data transferability; and in the model training stage, the determination sub-model is also used to output the second determination result representing the category similarity between the first prediction category and the real category based on the real category and the first prediction category of the first reference bounding box, so as to prompt the generation sub-model to continuously learn the category of the target object in the image area in the bounding box, so that the first prediction category is closer to the real category, since the model training process does not focus on the prediction category itself, but relies on the authenticity determination result of the determination sub-model, the model parameters related to the prediction of the category of the target object are constantly updated, which improves the accuracy of the target classification, the model generalization and the data transferability of the trained target detection model; and the determination result set output by the determination sub-model includes the first determination result and the second determination result, so based on the determination result set, the total loss value of the model to be trained is determined, and then continuously iteratively update the model parameters of the generation sub-model and the model parameters of the determination sub-model based on the total loss value for multiple rounds to ensure the accuracy of labeling the position of the target object and the accuracy of the classification of the target object during the process of the target detection.

It should be noted that the embodiment about the storage medium in the present application and the specific embodiment about the model training method in the present application are based on the same inventive concept. Therefore, for the specific implementation of this embodiment, please refer to the implementation of the corresponding model training method mentioned above. Repeated parts are no longer described.

The above has described specific embodiments of the present application. Other embodiments are within the scope of the appended claims. In some cases, actions or steps recited in the claims can be performed in a order different from the embodiments and still achieve desired results. Additionally, the processes depicted in the figures do not necessarily require a specific order, or a sequential order as shown, to achieve desirable results. A multitasking processing and a parallel processing are also possible or may be advantageous in certain implementations.

Those skilled in the art should understand that embodiments of the present application may be provided as methods, systems or computer program products. Therefore, embodiments of the present application may take a form of an embodiment of hardware, an embodiment of software, or an embodiment that combines the software and the hardware. Furthermore, the present application may take a form of the computer program product embodied on one or more computer-readable storage medium (including, but not limited to, a disk storage, a CD-ROM, an optical storage, etc.) embodying computer-usable program code therein.

The present application is described with reference to flowchart illustrations and/or block diagrams of methods, devices (systems), and computer program products according to embodiments of the application. It will be understood that each process and/or each block in the flowchart illustrations and/or block diagrams, and combinations of processes and/or blocks in the flowchart illustrations and/or block diagrams, can be implemented by computer program instructions. These computer program instructions may be provided to a processor of a general purpose computer, a special purpose computer, an embedded processor, or other programmable data processing device to produce a machine, such that the instructions executed by the processor of the computer or other programmable data processing device perform functions specified in one process or processes of the flowchart and/or one block or blocks of the block diagram.

These computer program instructions may also be stored in a computer-readable storage device that causes a computer or other programmable data processing device to operate in a particular manner, such that the instructions stored in the computer-readable storage device produce an article of manufacture including instruction device, the instruction device implements the functions specified in one process or processes in the flowchart and/or in one block or blocks in the block diagram.

These computer program instructions may also be loaded onto a computer or other programmable data processing device, causing a series of operating steps to be performed on the computer or the other programmable device to produce a computer-implemented processing, thereby executing on the computer or the other programmable device. Instructions provide steps for implementing the functions specified in one process or processes of the flowchart diagram and/or one block or blocks of the block diagram.

In a typical configuration, the computing device includes one or more processors (CPUs), an input/output interface, a network interface, and a memory.

The memory may include non-permanent storage in a computer-readable medium, a random access memory (RAM), and/or a non-volatile memory in a form of read-only memory (ROM) or flash memory (flash RAM). The memory is an example of computer-readable medium.

The computer-readable medium includes a persistent medium and a non-volatile medium, a removable medium and a non-removable medium that can be implemented by any method or technology for storage of information. The information may be computer-readable instructions, data structures, modules of programs, or other data. Examples of the computer storage medium include, but are not limited to, a phase change memory (PRAM), a static random access memory (SRAM), a dynamic random access memory (DRAM), other types of random access memory (RAM), a read-only memory (ROM), an electrically erasable programmable read-only memory (EEPROM), a flash memory or other memory technology, a compact disc read-only memory (CD-ROM), a digital versatile disc (DVD) or other optical storages, a magnetic tape, a disk storage or other magnetic storage devices, or any other non-transmission medium that can be used to store information that can be accessed by the computing device. As defined in this article, the computer-readable medium does not include transitory media, such as modulated data signals and carrier waves.

It should also be noted that terms "comprises," "comprising," or any other variation thereof are intended to cover a non-exclusive inclusion, such that a process, a method, an article, or a device that includes a list of elements not only includes those elements, but also includes other elements are not expressly listed or are inherent to the process, the method, the article or he device. Without further limitation, an element defined by the statement "comprises a..." does not exclude a presence of additional identical elements in the process, the method, the article, or the device that includes the element.

Embodiments of the present application may be described in the general context of computer-executable instructions, such as program modules, being executed by a computer. Generally, the program modules include routines, programs, objects, components, data structures, etc. that perform specific tasks or implement specific abstract data types. One or more embodiments of the present application may also be practiced in a distributed computing environment where tasks are performed by remote processing devices connected through a communications network. In the distributed computing environment, program modules may be located in both local and remote computer storage medium including storage devices.

Each embodiment in the present application is described in a progressive manner. The same and similar parts between the various embodiments can be referred to each other. Each embodiment focuses on its differences from other embodiments. In particular, for the system embodiment, since it is basically similar to the method embodiment, the description is relatively simple. For relevant details, please refer to the partial description of the method embodiment.

The are only examples of this document and are not intended to limit this document. Various modifications and variations of this document may occur to those skilled in the art.

**Claims**

1. A model training method, comprising:

   obtaining a first reference bounding box from a first candidate bounding box set, and obtaining a real bounding box corresponding to the first reference bounding box and a real category of the real bounding box;
   obtaining a target detection model by inputting the first reference bounding box, the real bounding box and the real category into a model to be trained for an iterative model training until the iterative model training meets a termination condition; wherein, the model to be trained comprises a generation sub-model and a determination sub-model; each model training of the iterative model training comprises:

predicting based on the first reference bounding box and obtaining a first prediction bounding box and a first prediction category by the generation sub-model; generating, by the determination sub-model, a determination result set based on the real bounding box, the first prediction bounding box, the real category, and the first prediction category; wherein the determination result set comprises a first determination result and a second determination result, and the first determination result represents a bounding box distribution similarity of the first prediction bounding box and the real bounding box under a condition that a constraint is met, the constraint is that a category of a target object in the first prediction bounding box is predicted as a target category that matches the real category by the generation sub-model, and the second determination result represents a category similarity between the first prediction category and the real category; determining a total loss value of the model to be trained based on the first determination result and the second determination result; and updating model parameters of the generation sub-model and model parameters of the determination sub-model based on the total loss value; **characterized in that** the constraint comprises a category matching stage-type constraint or a category matching gradient constraint; wherein the category matching stage-type constraint is that when a current number of model training rounds is less than a first preset round number, the real category and the first prediction category belong to a same category group, and when the current number of model training rounds is greater than or equal to the first preset round number, the real category is same as the first prediction category; wherein the category matching gradient constraint is that a sum of a first constraint term and a second constraint term is greater than a preset probability threshold, the first constraint term is a first prediction probability corresponding to the real category in a category prediction probability subset, the second constraint term is a product of a sum of second prediction probabilities except the first prediction probability in the category prediction probability subset and a preset adjustment factor, and the preset adjustment factor gradually decreases as the current number of model training rounds increases.

2. The method according to claim 1, wherein generating the determination result set based on the real bounding box, the first prediction bounding box, the real category, and the first prediction category comprises:

obtaining the first determination result by determining an authenticity for the real bounding box and the first prediction bounding box when the first prediction category satisfies the constraint; and obtaining the second determination result by determining an authenticity for the real category and the first prediction category.

3. The method according to claim 2, wherein the determination result set further comprises a third determination result; wherein generating the determination result set based on the real bounding box, the first prediction bounding box, the real category, and the first prediction category further comprises: obtaining the third determination result by calculating a bounding box intersection over union loss based on the real bounding box and the first prediction bounding box, when the first prediction category satisfies the constraint.

4. The method according to claim 2, wherein the determination result set further comprises a fourth determination result; wherein generating the determination result set based on the real bounding box, the first prediction bounding box, the real category, and the first prediction category further comprises: obtaining the fourth determination result by calculating a loss compensation value for constraining a loss gradient of a loss function of the model to be trained based on the real bounding box and the first prediction bounding box.

5. The method according to claim 3 or claim 4, wherein determining the total loss value of the model to be trained based on the first determination result and the second determination result comprises:

determining a sub-loss value of the first reference bounding box based on target information, the target information comprising at least one of : whether the first prediction category of the first reference bounding box satisfies the constraint, the bounding box distribution similarity represented by the first determination result, the category similarity represented by the second determination result, a degree of coincidence of bounding box coordinates represented by the third determination result, and the loss compensation value represented by the fourth determination result; and determining the total loss value of the model to be trained based on the sub-loss value.

6. The method according to claim 4, wherein obtaining the fourth determination result by calculating the loss compensation value for constraining the loss gradient of the loss function of the model to be trained based on the real bounding box and the first prediction bounding box comprises:

generating a synthetic bounding box based on the real bounding box and the first prediction bounding box;
determining the loss compensation value based on a bounding box distribution similarity of the synthetic bounding box and the real bounding box; and
generating the fourth determination result of the first reference bounding box based on the loss compensation value.

7. The method according to claim 6, wherein generating the synthetic bounding box based on the real bounding box and the first prediction bounding box comprises:

determining a first coordinate information subset based on a first sampling ratio and a first coordinate information set of the real bounding box corresponding to the first reference bounding box;
determining a second coordinate information subset based on a second sampling ratio and a second coordinate information set of the first prediction bounding box corresponding to the first reference bounding box; a sum of the first sampling ratio and the second sampling ratio being equal to 1; and
generating the synthetic bounding box corresponding to the first reference bounding box based on the first coordinate information subset and the second coordinate information subset.

8. The method according to claim 2, wherein obtaining the first determination result by determining the authenticity for the real bounding box and the first prediction bounding box comprises:

determining a first determination probability that the determination sub-model determines that the real bounding box is true;
determining a second determination probability that the determination sub-model determines that the first prediction bounding box is fake; and
generating the first determination result based on the first determination probability and the second determination probability.

9. The method according to claim 8, wherein generating the first determination result based on the first determination probability and the second determination probability comprises:

determining a first weighted probability based on the first determination probability and a first prior probability of the real bounding box;
determining a second weighted probability based on the second determination probability and a second prior probability of the first reference bounding box; and
generating the first determination result based on the first weighted probability and the second weighted probability.

10. The method according to claim 2, wherein obtaining the second determination result by determining the authenticity for the real category and the first prediction category comprises:

determining a third determination probability that the determination sub-model determines that the real category is true; determining a fourth determination probability that the determination sub-model determines that the first prediction category is fake; and
generating the second determination result based on the third determination probability and the fourth determination probability.

11. The method according to claim 10, wherein generating the second determination result based on the third determination probability and the fourth determination probability comprises:

determining a third weighted probability based on the third determination probability and a third prior probability that a category of the real bounding box is the real category;
determining a fourth weighted probability based on the fourth determination probability and a fourth prior probability that a category of the first reference bounding box is the real category; and
generating the second determination result based on the third weighted probability and the fourth weighted probability.

12. The method of claim 1, further comprising:

obtaining a first candidate bounding box set by inputting a preset sample image set into a preset region of interest extraction model for extracting regions of interest; the first candidate bounding box set comprising a second designated number of candidate bounding boxes, and the second designated number being greater than a first designated number; and
obtaining the first designated number of first reference bounding boxes from the first candidate bounding box set, comprising: randomly selecting the first designated number of candidate bounding boxes from the second designated number of candidate bounding boxes as first reference bounding boxes.

13. A target detection method, comprising:

obtaining a second reference bounding box from a second candidate bounding box set;
obtaining a second prediction bounding box and a second prediction category of the second reference bounding box by inputting the second reference bounding box into the target detection model according to any one of claims 1 to 12 for a target detection;
generating a target detection result of an image to be detected based on the second prediction bounding box and the second prediction category.

14. A computer device, comprising:

a processor; and
a storage device arranged to store computer-executable instructions configured to be executed by the processor, the executable instructions comprising instructions for performing steps of the method of any one of claims 1 to 12 or claim 13.

15. A non-transitory storage medium, the storage medium being used to store computer-executable instructions, the executable instructions causing a computer device to execute the method according to any one of claims 1 to 12 or claim 13.

**Patentansprüche**

1. Modelltrainingsverfahren, umfassend:

Erhalten eines ersten Referenz-Begrenzungsrahmens aus einem ersten Kandidaten-Begrenzungsrahmensatz und Erhalten eines realen Begrenzungsrahmens, der dem ersten Referenz-Begrenzungsrahmen und einer realen Kategorie des realen Begrenzungsrahmens entspricht;
Erhalten eines Zielerkennungsmodells durch Eingeben des ersten Referenz-Begrenzungsrahmens, des realen Begrenzungsrahmens und der realen Kategorie in ein für ein iteratives Modelltraining zu trainierendes Modell, bis das iterative Modelltraining eine Abbruchbedingung erfüllt; wobei das zu trainierende Modell ein Generierungsteilmodell und ein Bestimmungsteilmodell umfasst; wobei jedes Modelltraining des iterativen Modelltrainings Folgendes umfasst:

Vorhersagen basierend auf dem ersten Referenz-Begrenzungsrahmen und Erhalten eines ersten Vorhersage-Begrenzungsrahmens und einer ersten Vorhersagekategorie durch das Generierungsteilmodell;
Generieren eines Bestimmungsergebnissatzes basierend auf dem realen Begrenzungsrahmen, dem ersten Vorhersage-Begrenzungsrahmen, der realen Kategorie und der ersten Vorhersagekategorie durch das Bestimmungsteilmodell; wobei der Bestimmungsergebnissatz ein erstes Bestimmungsergebnis und ein zweites Bestimmungsergebnis umfasst und das erste Bestimmungsergebnis eine Begrenzungsrahmenverteilungsähnlichkeit des ersten Vorhersage-Begrenzungsrahmens und des realen Begrenzungsrahmens unter einer Bedingung darstellt, dass eine Einschränkung erfüllt ist, wobei die Einschränkung darin besteht, dass eine Kategorie eines Zielobjekts in dem ersten Vorhersage-Begrenzungsrahmen durch das Generierungsteilmodell als eine Zielkategorie vorhergesagt wird, die mit der realen Kategorie übereinstimmt, und das zweite Bestimmungsergebnis eine Kategorieähnlichkeit zwischen der ersten Vorhersagekategorie und der realen Kategorie darstellt; Bestimmen eines Gesamtverlustwerts des zu trainierenden Modells basierend auf dem ersten Bestimmungsergebnis und dem zweiten Bestimmungsergebnis; und
Aktualisieren von Modellparametern des Generierungsteilmodells und Modellparametern des Bestimmungsteilmodells basierend auf dem Gesamtverlustwert;
**dadurch gekennzeichnet, dass**
die Einschränkung eine Einschränkung der Kategorieübereinstimmungsphasenart oder eine Einschränkung eines Kategorieübereinstimmungsgradienten umfasst; wobei die Einschränkung der Kategorieübereinstimmungsphasenart darin besteht, dass, wenn eine aktuelle Anzahl von Modelltrainingsrunden kleiner als eine erste vorgegebene Rundenzahl ist, die reale Kategorie und die erste Vorhersagekategorie zu einer gleichen Kategoriegruppe gehören, und wenn die aktuelle Anzahl von Modelltrainingsrunden größer als die erste vorgegebene Rundenzahl oder gleich dieser ist, die reale Kategorie die gleiche wie die erste Vorhersagekategorie ist; wobei die Einschränkung eines Kategorieübereinstimmungsgradienten darin besteht, dass eine Summe eines ersten Einschränkungsterms und eines zweiten Einschränkungsterms größer als ein vorgegebener Wahrscheinlichkeitsschwellenwert ist, der erste Einschränkungsterm eine erste Vorhersagewahrscheinlichkeit ist, die der realen Kategorie in einem Kategorievorhersagewahrscheinlichkeits-Teilsatz entspricht, der zweite Einschränkungsterm ein Produkt einer Summe von zweiten Vorhersagewahrscheinlichkeiten mit Ausnahme der ersten Vorhersagewahrscheinlichkeit in dem Kategorievorhersagewahrscheinlichkeits-Teilsatz und eines vorgegebenen Anpassungsfaktors ist und der vorgegebene Anpassungsfaktor kontinuierlich abnimmt, wenn die aktuelle Anzahl von Modelltrainingsrunden zunimmt.

2. Verfahren nach Anspruch 1, wobei das Generieren des Bestimmungsergebnissatzes basierend auf dem realen Begrenzungsrahmens, dem ersten Vorhersage-Begrenzungsrahmen, der realen Kategorie und der ersten Vorhersagekategorie Folgendes umfasst:

   Erhalten des ersten Bestimmungsergebnisses durch Bestimmen einer Authentizität für den realen Begrenzungsrahmen und den ersten Vorhersage-Begrenzungsrahmen, wenn die erste Vorhersagekategorie die Einschränkung erfüllt; und
   Erhalten des zweiten Bestimmungsergebnisses durch Bestimmen einer Authentizität für die reale Kategorie und die erste Vorhersagekategorie.

3. Verfahren nach Anspruch 2, wobei der Bestimmungsergebnissatz ferner ein drittes Bestimmungsergebnis umfasst; wobei das Generieren des Bestimmungsergebnissatzes basierend auf dem realen Begrenzungsrahmen, dem ersten Vorhersage-Begrenzungsrahmen, der realen Kategorie und der ersten Vorhersagekategorie ferner Folgendes umfasst:
   Erhalten des dritten Bestimmungsergebnisses durch Berechnen eines Begrenzungsrahmen-Intersection over Union-Verlustes basierend auf dem realen Begrenzungsrahmen und dem ersten Vorhersage-Begrenzungsrahmen, wenn die erste Vorhersagekategorie die Einschränkung erfüllt.

4. Verfahren nach Anspruch 2, wobei der Bestimmungsergebnissatz ferner ein viertes Bestimmungsergebnis umfasst; wobei das Generieren des Bestimmungsergebnissatzes basierend auf dem realen Begrenzungsrahmen, dem ersten Vorhersage-Begrenzungsrahmen, der realen Kategorie und der ersten Vorhersagekategorie ferner Folgendes umfasst:
   Erhalten des vierten Bestimmungsergebnisses durch Berechnen eines Verlustkompensationswerts zum Einschränken eines Verlustgradienten einer Verlustfunktion des zu trainierenden Modells basierend auf dem realen Begrenzungsrahmen und dem ersten Vorhersage-Begrenzungsrahmen.

5. Verfahren nach Anspruch 3 oder Anspruch 4, wobei das Bestimmen des Gesamtverlustwerts des zu trainierenden Modells basierend auf dem ersten Bestimmungsergebnis und dem zweiten Bestimmungsergebnis Folgendes umfasst:

   Bestimmen eines Teilverlustwerts des ersten Referenz-Begrenzungsrahmens basierend auf Zielinformationen, wobei die Zielinformationen mindestens eines von Folgenden umfassen: ob die erste Vorhersagekategorie des ersten Referenz-Begrenzungsrahmens die Einschränkung erfüllt, die durch das erste Bestimmungsergebnis dargestellte Begrenzungsrahmenverteilungsähnlichkeit, die durch das zweite Bestimmungsergebnis dargestellte Kategorieähnlichkeit, ein durch das dritte Bestimmungsergebnis dargestelltes Koinzidenzniveau von Begrenzungsrahmenkoordinaten und den durch das vierte Bestimmungsergebnis dargestellten Verlustkompensationswert; und
   Bestimmen des Gesamtverlustwerts des zu trainierenden Modells basierend auf dem Teilverlustwert.

**6.** Verfahren nach Anspruch 4, wobei das Erhalten des vierten Bestimmungsergebnisses durch Berechnen des Verlustkompensationswerts zum Einschränken des Verlustgradienten der Verlustfunktion des zu trainierenden Modells basierend auf dem realen Begrenzungsrahmen und dem ersten Vorhersage-Begrenzungsrahmen Folgendes umfasst:

Generieren eines synthetischen Begrenzungsrahmens basierend auf dem realen Begrenzungsrahmen und dem ersten Vorhersage-Begrenzungsrahmen;
Bestimmen des Verlustkompensationswerts basierend auf einer Begrenzungsrahmenverteilungsähnlichkeit des synthetischen Begrenzungsrahmens und des realen Begrenzungsrahmens; und
Generieren des vierten Bestimmungsergebnisses des ersten Referenz-Begrenzungsrahmens basierend auf dem Verlustkompensationswert.

**7.** Verfahren nach Anspruch 6, wobei das Generieren des synthetischen Begrenzungsrahmens basierend auf dem realen Begrenzungsrahmen und dem ersten Vorhersage-Begrenzungsrahmen Folgendes umfasst:

Bestimmen eines ersten Koordinateninformationsteilsatzes basierend auf einem ersten Abtastverhältnis und einem ersten Koordinateninformationssatz des realen Begrenzungsrahmens, der dem ersten Referenz-Begrenzungsrahmen entspricht;
Bestimmen eines zweiten Koordinateninformationsteilsatzes basierend auf einem zweiten Abtastverhältnis und einem zweiten Koordinateninformationssatz des ersten Vorhersage-Begrenzungsrahmens, der dem ersten Referenz-Begrenzungsrahmen entspricht; wobei eine Summe des ersten Abtastverhältnisses und des zweiten Abtastverhältnisses gleich 1 ist; und
Generieren des synthetischen Begrenzungsrahmens, der dem ersten Referenz-Begrenzungsrahmen entspricht, basierend auf dem ersten Koordinateninformationsteilsatz und dem zweiten Koordinateninformationsteilsatz.

**8.** Verfahren nach Anspruch 2, wobei das Erhalten des ersten Bestimmungsergebnisses durch Bestimmen der Authentizität für den realen Begrenzungsrahmen und den ersten Vorhersage-Begrenzungsrahmen Folgendes umfasst:

Bestimmen einer ersten Bestimmungswahrscheinlichkeit, dass das Bestimmungsteilmodell bestimmt, dass der reale Begrenzungsrahmen wahr ist;
Bestimmen einer zweiten Bestimmungswahrscheinlichkeit, dass das Bestimmungsteilmodell bestimmt, dass der erste Vorhersage-Begrenzungsrahmen falsch ist; und
Generieren des ersten Bestimmungsergebnisses basierend auf der ersten Bestimmungswahrscheinlichkeit und der zweiten Bestimmungswahrscheinlichkeit.

**9.** Verfahren nach Anspruch 8, wobei das Generieren des ersten Bestimmungsergebnisses basierend auf der ersten Bestimmungswahrscheinlichkeit und der zweiten Bestimmungswahrscheinlichkeit Folgendes umfasst:

Bestimmen einer ersten gewichteten Wahrscheinlichkeit basierend auf der ersten Bestimmungswahrscheinlichkeit und einer ersten a-priori-Wahrscheinlichkeit des realen Begrenzungsrahmens;
Bestimmen einer zweiten gewichteten Wahrscheinlichkeit basierend auf der zweiten Bestimmungswahrscheinlichkeit und einer zweiten a-priori-Wahrscheinlichkeit des ersten Referenz-Begrenzungsrahmens; und
Generieren des ersten Bestimmungsergebnisses basierend auf der ersten gewichteten Wahrscheinlichkeit und der zweiten gewichteten Wahrscheinlichkeit.

**10.** Verfahren nach Anspruch 2, wobei das Erhalten des zweiten Bestimmungsergebnisses durch Bestimmen der Authentizität für die reale Kategorie und die erste Vorhersagekategorie Folgendes umfasst:

Bestimmen einer dritten Bestimmungswahrscheinlichkeit, dass das Bestimmungsteilmodell bestimmt, dass die reale Kategorie wahr ist; Bestimmen einer vierten Bestimmungswahrscheinlichkeit, dass das Bestimmungsteilmodell bestimmt, dass die erste Vorhersagekategorie falsch ist; und
Generieren des zweiten Bestimmungsergebnisses basierend auf der dritten Bestimmungswahrscheinlichkeit und der vierten Bestimmungswahrscheinlichkeit.

**11.** Verfahren nach Anspruch 10, wobei das Generieren des zweiten Bestimmungsergebnisses basierend auf der dritten Bestimmungswahrscheinlichkeit und der vierten Bestimmungswahrscheinlichkeit Folgendes umfasst:

Bestimmen einer dritten gewichteten Wahrscheinlichkeit basierend auf der dritten Bestimmungswahrscheinlichkeit und einer dritten a-priori-Wahrscheinlichkeit, dass eine Kategorie des realen Begrenzungsrahmens die reale Kategorie ist;

Bestimmen einer vierten gewichteten Wahrscheinlichkeit basierend auf der vierten Bestimmungswahrscheinlichkeit und einer vierten a-priori-Wahrscheinlichkeit, dass eine Kategorie des ersten Referenz-Begrenzungsrahmens die reale Kategorie ist; und

Generieren des zweiten Bestimmungsergebnisses basierend auf der dritten gewichteten Wahrscheinlichkeit und der vierten gewichteten Wahrscheinlichkeit.

**12.** Verfahren nach Anspruch 1, ferner umfassend:

Erhalten eines ersten Kandidaten-Begrenzungsrahmensatzes durch Eingeben eines vorgegebenen Beispielbildsatzes in ein vorgegebenes Extraktionsmodell für relevante Bereiche zum Extrahieren von relevanten Bereichen; wobei der erste Kandidaten-Begrenzungsrahmensatz eine zweite bezeichnete Anzahl von Kandidaten-Begrenzungsrahmen umfasst und die zweite bezeichnete Anzahl größer als eine erste bezeichnete Anzahl ist; und

Erhalten der ersten bezeichneten Anzahl von ersten Referenz-Begrenzungsrahmen aus dem ersten Kandidaten-Begrenzungsrahmensatz, umfassend: zufälliges Auswählen der ersten bezeichneten Anzahl von Kandidaten-Begrenzungsrahmen aus der zweiten bezeichneten Anzahl von Kandidaten-Begrenzungsrahmen als erste Referenz-Begrenzungsrahmen.

**13.** Zielerkennungsverfahren, umfassend:

Erhalten eines zweiten Referenz-Begrenzungsrahmens aus einem zweiten Kandidaten-Begrenzungsrahmensatz;

Erhalten eines zweiten Vorhersage-Begrenzungsrahmens und einer zweiten Vorhersagekategorie des zweiten Referenz-Begrenzungsrahmens durch Eingeben des zweiten Referenz-Begrenzungsrahmens in das Zielerkennungsmodell nach einem der Ansprüche 1 bis 12 für eine Zielerkennung;

Generieren eines Zielerkennungsergebnisses eines zu erkennenden Bildes basierend auf dem zweiten Vorhersage-Begrenzungsrahmen und der zweiten Vorhersagekategorie.

**14.** Computervorrichtung, umfassend:

einen Prozessor; und

eine Speichervorrichtung, die angeordnet ist, um computerausführbare Anweisungen zu speichern, die konfiguriert sind, um durch den Prozessor ausgeführt zu werden, wobei die ausführbaren Anweisungen Anweisungen zum Durchführen von Schritten des Verfahrens nach einem der Ansprüche 1 bis 12 oder Anspruch 13 umfassen.

**15.** Nichttransitorisches Speichermedium, wobei das Speichermedium verwendet wird, um computerausführbare Anweisungen zu speichern, wobei die ausführbaren Anweisungen eine Computervorrichtung veranlassen, das Verfahren nach einem der Ansprüche 1 bis 12 oder Anspruch 13 auszuführen.

## Revendications

**1.** Procédé de formation de modèle, comprenant :

l'obtention d'une première boîte englobante de référence à partir d'un premier ensemble de boîtes englobantes candidates, et l'obtention d'une boîte englobante réelle correspondant à la première boîte englobante de référence et d'une catégorie réelle de la boîte englobante réelle ;

l'obtention d'un modèle de détection de cible en injectant la première boîte englobante de référence, la boîte englobante réelle et la catégorie réelle dans un modèle à entraîner, en vue d'un entraînement itératif de modèle jusqu'à ce que l'entraînement itératif satisfasse à une condition d'arrêt ; dans lequel le modèle à entraîner comprend un sous-modèle de génération et un sous-modèle de détermination ; chaque entraînement de modèle de l'entraînement de modèle itératif comprend :

la prédiction, sur la base de la première boîte englobante de référence, et l'obtention d'une première boîte englobante de prédiction et d'une première catégorie de prédiction par le sous-modèle de génération ; la génération, par le sous-modèle de détermination, d'un ensemble de résultats de détermination sur la base de la boîte englobante réelle, de la première boîte englobante de prédiction, de la catégorie réelle et de la première catégorie de prédiction ; dans lequel l'ensemble de résultats de détermination comprend un premier résultat de détermination et un deuxième résultat de détermination, et le premier résultat de détermination représente une similarité de distribution de boîtes englobantes de la première boîte englobante de prédiction et de la boîte englobante réelle sous une condition qu'une contrainte soit satisfaite, la contrainte étant qu'une catégorie d'un objet cible dans la première boîte englobante de prédiction est prédite comme une catégorie cible correspondant à la catégorie réelle par le sous-modèle de génération, et le deuxième résultat de détermination représente une similarité de catégorie entre la première catégorie de prédiction et la catégorie réelle ;

la détermination d'une valeur de perte totale du modèle à entraîner sur la base du premier résultat de détermination et du deuxième résultat de détermination ; et

la mise à jour des paramètres de modèle du sous-modèle de génération et des paramètres de modèle du sous-modèle de détermination sur la base de la valeur de perte totale ;

**caractérisé en ce que** la contrainte comprend une contrainte de type par étapes de correspondance de catégorie ou une contrainte de gradient de correspondance de catégorie ; dans lequel la contrainte de type par étapes de correspondance de catégorie est telle que, lorsqu'un nombre courant de cycles d'entraînement de modèle est inférieur à un premier nombre de cycles prédéfini, la catégorie réelle et la première catégorie de prédiction appartiennent à un même groupe de catégories, et lorsque le nombre courant de cycles d'entraînement de modèle est supérieur ou égal au premier nombre de cycles prédéfini, la catégorie réelle est identique à la première catégorie de prédiction ; dans lequel la contrainte de gradient de correspondance de catégorie est telle qu'une somme d'un premier terme de contrainte et d'un second terme de contrainte est supérieure à un seuil de probabilité prédéfini, le premier terme de contrainte est une première probabilité de prédiction correspondant à la catégorie réelle dans un sous-ensemble de probabilités de prédiction de catégorie, le second terme de contrainte est un produit d'une somme de secondes probabilités de prédiction autres que la première probabilité de prédiction dans le sous-ensemble de probabilités de prédiction de catégories et d'un facteur d'ajustement prédéfini, et le facteur d'ajustement prédéfini diminuant progressivement à mesure que le nombre courant de cycles d'entraînement de modèle augmente.

2. Procédé selon la revendication 1, dans lequel la génération de l'ensemble de résultats de détermination sur la base de la boîte englobante réelle, de la première boîte englobante de prédiction, de la catégorie réelle et de la première catégorie de prédiction comprend :

l'obtention du premier résultat de détermination par détermination d'une authenticité pour la boîte englobante réelle et la première boîte englobante de prédiction lorsque la première catégorie de prédiction satisfait à la contrainte ; et

l'obtention du deuxième résultat de détermination par détermination d'une authenticité de la catégorie réelle et de la première catégorie de prédiction.

3. Procédé selon la revendication 2, dans lequel l'ensemble de résultats de détermination comprend en outre un troisième résultat de détermination ; dans lequel la génération de l'ensemble de résultats de détermination sur la base de la boîte englobante réelle, de la première boîte englobante de prédiction, de la catégorie réelle et de la première catégorie de prédiction comprend en outre :

l'obtention du troisième résultat de détermination en calculant une perte d'intersection de boîte englobante sur union sur la base de la boîte englobante réelle et de la première boîte englobante de prédiction, lorsque la première catégorie de prédiction satisfait la contrainte.

4. Procédé selon la revendication 2, dans lequel l'ensemble de résultats de détermination comprend en outre un quatrième résultat de détermination ; dans lequel la génération de l'ensemble de résultats de détermination sur la base de la boîte englobante réelle, de la première boîte englobante de prédiction, de la catégorie réelle et de la première catégorie de prédiction comprend en outre :

l'obtention du quatrième résultat de détermination par calcul d'une valeur de compensation de perte destinée à contraindre un gradient de perte d'une fonction de perte du modèle à entraîner sur la base de la boîte englobante réelle et de la première boîte englobante de prédiction.

5. Procédé selon la revendication 3 ou la revendication 4, dans lequel la détermination de la valeur de perte totale du modèle à entraîner sur la base du premier résultat de détermination et du deuxième résultat de détermination comprend :

la détermination d'une sous-valeur de perte de la première boîte englobante de référence sur la base d'informations sur la cible, les informations sur la cible comprenant au moins l'un des éléments suivants : si la première catégorie de prédiction de la première boîte englobante de référence satisfait à la contrainte, la similarité de distribution de boîtes englobantes représentée par le premier résultat de détermination, la similarité de catégorie représentée par le deuxième résultat de détermination, un degré de coïncidence entre les coordonnées de boîte englobante représentées par le troisième résultat de détermination, et la valeur de compensation de perte représentée par le quatrième résultat de détermination ; et

la détermination de la valeur de perte totale du modèle à entraîner sur la base de la sous-valeur de perte.

6. Procédé selon la revendication 4, dans lequel l'obtention du quatrième résultat de détermination par calcul de la valeur de compensation de perte destinée à contraindre le gradient de perte de la fonction de perte du modèle à entraîner sur la base de la boîte englobante réelle et de la première boîte englobante de prédiction comprend :

la génération d'une boîte englobante synthétique sur la base de la boîte englobante réelle et de la première boîte englobante de prédiction ;

la détermination de la valeur de compensation de perte sur la base d'une similarité de distribution de boîtes englobantes entre la boîte englobante synthétique et la boîte englobante réelle ; et

la génération du quatrième résultat de détermination de la première boîte englobante de référence sur la base de la valeur de compensation de perte.

7. Procédé selon la revendication 6, dans lequel la génération de la boîte englobante synthétique sur la base de la boîte englobante réelle et de la première boîte englobante de prédiction comprend :

la détermination d'un premier sous-ensemble d'informations de coordonnées sur la base d'un premier ratio d'échantillonnage et d'un premier ensemble d'informations de coordonnées de la boîte englobante réelle correspondant à la première boîte englobante de référence ;

la détermination d'un second sous-ensemble d'informations de coordonnées sur la base d'un second ratio d'échantillonnage et d'un second ensemble d'informations de coordonnées de la première boîte englobante de prédiction correspondant à la première boîte englobante de référence ; une somme entre le premier ratio d'échantillonnage et le second ratio d'échantillonnage étant égale à 1 ; et

la génération de la boîte englobante synthétique correspondant à la première boîte englobante de référence sur la base du premier sous-ensemble d'informations de coordonnées et du second sous-ensemble d'informations de coordonnées.

8. Procédé selon la revendication 2, dans lequel l'obtention du premier résultat de détermination par détermination de l'authenticité de la boîte englobante réelle et de la première boîte englobante de prédiction comprend :

la détermination d'une première probabilité de détermination selon laquelle le sous-modèle de détermination détermine que la boîte englobante réelle est vraie ;

la détermination d'une deuxième probabilité de détermination selon laquelle le sous-modèle de détermination détermine que la première boîte englobante de prédiction est fausse ; et

la génération du premier résultat de détermination sur la base de la première probabilité de détermination et de la deuxième probabilité de détermination.

9. Procédé selon la revendication 8, dans lequel la génération du premier résultat de détermination sur la base de la première probabilité de détermination et de la deuxième probabilité de détermination comprend :

la détermination d'une première probabilité pondérée sur la base de la première probabilité de détermination et d'une première probabilité a priori de la boîte englobante réelle ;

la détermination d'une deuxième probabilité pondérée sur la base de la deuxième probabilité de détermination et d'une deuxième probabilité a priori de la première boîte englobante de référence ; et

la génération du premier résultat de détermination sur la base de la première probabilité pondérée et de la deuxième probabilité pondérée.

10. Procédé selon la revendication 2, dans lequel l'obtention du deuxième résultat de détermination par détermination de l'authenticité pour la catégorie réelle et la première catégorie de prédiction comprend :

la détermination d'une troisième probabilité de détermination selon laquelle le sous-modèle de détermination détermine que la catégorie réelle est vraie ; la détermination d'une quatrième probabilité de détermination selon laquelle le sous-modèle de détermination détermine que la première catégorie de prédiction est fausse ; et la génération du deuxième résultat de détermination sur la base de la troisième probabilité de détermination et de la quatrième probabilité de détermination.

11. Procédé selon la revendication 10, dans lequel la génération du deuxième résultat de détermination sur la base de la troisième probabilité de détermination et de la quatrième probabilité de détermination comprend :

la détermination d'une troisième probabilité pondérée sur la base de la troisième probabilité de détermination et d'une troisième probabilité a priori selon laquelle une catégorie de la boîte englobante réelle correspond à la catégorie réelle ;
la détermination d'une quatrième probabilité pondérée sur la base de la quatrième probabilité de détermination et d'une quatrième probabilité a priori selon laquelle une catégorie de la première boîte englobante de référence correspond à la catégorie réelle ; et
la génération du deuxième résultat de détermination sur la base de la troisième probabilité pondérée et de la quatrième probabilité pondérée.

12. Procédé selon la revendication 1, comprenant également :

l'obtention d'un premier ensemble de boîtes englobantes candidates en injectant un ensemble d'images d'échantillons prédéfini dans un modèle prédéfini d'extraction de régions d'intérêt pour extraire des régions d'intérêt ; le premier ensemble de boîtes englobantes candidates comprenant un second nombre désigné de boîtes englobantes candidates, et le second nombre désigné étant supérieur à un premier nombre désigné ; et
l'obtention du premier nombre désigné de premières boîtes englobantes de référence à partir du premier ensemble de boîtes englobantes candidates, comprenant : la sélection aléatoire du premier nombre désigné de boîtes englobantes candidates parmi le second nombre désigné de boîtes englobantes candidates en tant que premières boîtes englobantes de référence.

13. Procédé de détection de cible, comprenant :

l'obtention d'une seconde boîte englobante de référence à partir d'un second ensemble de boîtes englobantes candidates ;
l'obtention d'une seconde boîte englobante de prédiction et d'une seconde catégorie de prédiction de la seconde boîte englobante de référence en injectant la seconde boîte englobante de référence dans le modèle de détection de cible selon l'une quelconque des revendications 1 à 12, pour une détection de cible ;
la génération d'un résultat de détection de cible d'une image à détecter sur la base de la seconde boîte englobante de prédiction et de la seconde catégorie de prédiction.

14. Système informatique, comprenant :

un processeur ; et
un dispositif de stockage conçu pour stocker des instructions exécutables par ordinateur configurées pour être exécutées par le processeur, les instructions exécutables comprenant des instructions pour effectuer les étapes du procédé selon l'une quelconque des revendications 1 à 12 ou de la revendication 13.

15. Support de stockage non transitoire, le support de stockage étant utilisé pour stocker des instructions exécutables par ordinateur, les instructions exécutables amenant un dispositif informatique à exécuter le procédé selon l'une quelconque des revendications 1 à 12 ou la revendication 13.

S102

Obtain a first reference bounding box from a first candidate bounding box set, and obtain a real bounding box corresponding to the first reference bounding box and a real category of the real bounding box

S104

Input the first reference bounding box, the real bounding box and the real category into a model to be trained for an iterative model training until a result of the iterative model training meets a termination condition of the iterative model training, and obtain a target detection model

FIG. 1

S1042

A generation sub-model obtains a first prediction bounding box and a first prediction category by predicting based on the first reference bounding box; a determination sub-model generates a determination result set based on the real bounding box and the first prediction bounding box, as well as the real category and the first prediction category

S1044

Determine a total loss value of the model to be trained based on the first determination result and the second determination result

S1046

Update model parameters of the generation sub-model and model parameters of the determination sub-model based on the total loss value

FIG. 2

FIG. 3

FIG. 4 a

FIG. 4 b

S502

obtain a second reference bounding box from a second candidate bounding box set

S504

Obtain a second prediction bounding box and a second prediction category corresponding to the second reference bounding box by inputting the second reference bounding box into the target detection model for a target detection

S506

Based on the second prediction bounding box and the second prediction category, generate a target detection result of the image to be detected

FIG. 5

FIG. 6

First bounding box obtaining module — 702

Model training module — 704

FIG. 7

Second bounding box obtaining module — 802

Target detection module — 804

Detection result generation module — 806

FIG. 8

Computer device

Processor — 901

Power supply — 903

Wired or wireless network interface — 904

Input/output interface — 905

Storage device — 902

Keyboard — 906

FIG. 9

# EP 4 390 858 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YUAN HUI-SHEN et al.** Multi-branch Bounding Box Regression for Object Detection. *COGNITIVE COMPUTATION*

- **CAI ZHAOWEI et al.** Cascade R-CNN: Delving Into High Quality Object Detection. *2018 IEEE/CVF CONFERENCE ON COMPUTER VISION AND PATTERN RECOGNITION*